# EUROPEAN PATENT APPLICATION

(11) **EP 2 574 044 A1**
(43) Date of publication of application: **27.03.2013**
(21) Application number: 11783634.6
(22) Date of filing: 19.05.2011
(51) Int. Cl.: H04N 5/76, G11B 31/00, H04M 1/00, H04N 5/44, H04N 5/765, H04N 7/173

(54) **REPRODUCTION DEVICE, DISPLAY DEVICE, TELEVISION RECEIVER, SYSTEM, RECOGNITION METHOD, PROGRAM, AND RECORDING MEDIUM**

(30) Priority: 19.05.2011 JP 2011112795; 19.05.2010 JP 2010115670
(71) Applicant: Sharp Kabushiki Kaisha, Osaka-shi, Osaka 545-8522 (JP)
(72) Inventor: YOSHIDA, Tatsuya, Osaka 545-8522 (JP); NAGANO, Tomohiro, Osaka 545-8522 (JP); KIMURA, Kenichi, Osaka 545-8522 (JP); ATSUMI, Tadamichi, Osaka 545-8522 (JP); HARA, Taisuke, Osaka 545-8522 (JP); DAIOKU, Shuji, Osaka 545-8522 (JP); SAWACHIKA, Kyohichiroh, Osaka 545-8522 (JP); OSAKI, Koji, Osaka 545-8522 (JP); MASHIKO, Ryutaro, Osaka 545-8522 (JP)
(74) Representative: Müller - Hoffmann & Partner
(86) International application number: PCT/JP2011/061584
(87) International publication number: WO 2011/145700

(57) **Abstract**

Disclosed herein is a mobile telephone terminal (2) for feeding a video image to a sink device, the mobile telephone terminal (2) including an output control section (2131) for carrying out control for supplying, to a television (1) through a CEC I/F (252), a Report Display Source Info command, which is a CEC command unique to the vendor and which inquires whether the television 1 is displaying a video image being fed to the television (1). The output control section (2131) obtains, through the CEC I/F (252), the result of the inquiry in the form of a Report Display Source Info command, which is a CEC command unique to the vendor.

## Description

### Technical Field

The present invention relates to (i) a reproduction device for feeding a reproduced video image to a display device for displaying a video image and (ii) a display device (such as a television receiver) for displaying a video image fed by such a reproduction device. The present invention further relates to a recognition method by which a reproduction device such as the above recognizes the state of a display device. The present invention still further relates to (i) a system including a reproduction device such as the above, (ii) a program for causing a computer to operate as a reproduction device such as the above, and (iii) a recording medium on which such a program has been recorded.

### Background Art

Recent years have witnessed widespread use of televisions (television receivers) and PCs (personal computers) including, mounted therein, an interface that conforms with the HDMI (High-Definition Multimedia Interface) standard. It is now a common practice to connect such a sink device to a source device (for example, an audio-visual apparatus or a mobile telephone) via an HDMI cable. A sink device and a source device connected to each other via an HDMI cable are capable of transmitting and receiving, to and from each other, not only video image data and audio data but also a CEC (consumer electronics control) command.

Such a CEC command transmitted and received to and from devices connected to each other via an HDMI cable includes, as an argument, the logical address and/or physical address of a transmitter and/or receiver. The devices connected to each other via an HDMI cable each specify, with reference to the logical address and/or physical address included in a CEC command, the transmitter and/or receiver of that CEC command.

The above logical address is expressed as an integer of 0 to 14, the integer indicating a device category (a television, a recorder, a player, a tuner, an audio or the like). For instance, the logical address "0" is assigned to a television, the logical address "1" is assigned to a first recorder, and the logical address "2" is assigned to a second recorder.

The use of CEC commands allows a sink device to control a source device or a source device to control a sink device, and can thus provide the user with conventionally unachievable convenience. The use of CEC commands, for instance, allows the input source of a sink device to be automatically switched to a source device that has started content reproduction. HDMI is described in detail in Non Patent Literature 1.

In response to, for example, growing awareness of environmental protection, there have been made various attempts intended to reduce power consumption of devices.

Patent Literature 1, for example, discloses a recording/reproduction device having two standby modes, namely (i) a low power-consumption mode in which power consumption is low but return to a normal mode is slow and (ii) a fast activation mode in which power consumption is large but return to the normal mode is fast. This recording/reproduction device is arranged to, when on standby, regularly check, with use of CEC commands, the state of the power supply for a television to which the recording/reproduction device is connected via an HDMI cable. The recording/ reproduction device is (i) in the case where it has determined that the television is on, set to the fast activation mode and (ii) in the case where it has determined that the television is off, set to the low power-consumption mode.

Patent Literatures 2 and 3 each disclose, although not related to a process that conforms with the HDMI standard, a technique for reducing power consumption of devices.

Patent Literature 2 discloses a calculator system including (i) a calculator and (ii) an openable cover that covers the calculator. This calculator system is arranged to stop the CPU of the calculator in the case where the calculator system has detected that the cover has been closed while the CPU is in operation. Patent Literature 3 discloses an information processing device capable of being set to either of two states that are different from each other in power consumption. This information processing device transits to (i) a state with low power consumption in the case where a predetermined time period has elapsed with no input and (ii) a state with high power consumption only in the case where the information processing device has detected input of a particular key among such a particular key and other keys.

### Citation list

Patent Literature 1
   Japanese Patent Application Publication, Tokukai, No. 2009-301633 A (Publication Date: December 24, 2009)
Patent Literature 2
   Japanese Patent Application Publication, *Tokukaihei,* No. 6-332564 A (Publication Date: December 2, 1994)
Patent Literature 3
   Japanese Patent Application Publication, *Tokukai,* No. 2005-18705 A (Publication Date: January 20, 2005)
Non Patent Literature 1
   High-Definition Multimedia Interface Specification Version 1.3a, November 10, 2006

### Summary of Invention

### Technical Problem

It is true that the above conventional arrangements are each capable of, by connecting to an external display device and feeding a reproduction video image from the device to such a display device, causing that display device to display the reproduction video image.

The above conventional devices are, however, each incapable of recognizing whether a reproduction video image that the device is feeding is not being displayed by the display device, and thus incapable of, in the case where the display device is not displaying a reproduction video image, carrying out a suitable process responding to such a case. The above conventional devices are, for instance, each incapable of carrying out a process of, in the case where a reproduction video image that the device is feeding has stopped being displayed by the display device, stopping feeding the reproduction video image to the display device to prevent the device from wasting electric power.

The present invention has been accomplished in view of the above problem. It is a main object of the present invention to provide a reproduction device capable of recognizing the state in which a reproduction video image that the reproduction device is feeding to a display device is not displayed by the display device.

### Solution to Problem

In order to solve the above problem, a reproduction device of the present invention includes: a video image feeding section for feeding a reproduced video image to a display device; and instructing means for instructing the display device to, in a case where the display device is not displaying the video image fed by the video image feeding section, return, to the instructing means, information indicating that the display device is not displaying the video image fed by the video image feeding section.

The display device may (i) in the case where it is not displaying the video image fed by the video image feeding section, return, to the reproduction device, information (that is, the "information" as recited in the claims) indicating that the display device is not displaying the video image and (ii) in the case where it is displaying the video image fed by the video image feeding section, transmit no information to the reproduction device. The display device may alternatively (i) in the case where it is not displaying the video image fed by the video image feeding section, return, to the reproduction device, first information (that is, the "information" as recited in the claims) indicating that the display device is not displaying the video image and (ii) in the case where it is displaying the video image fed by the video image feeding section, transmit, to the reproduction device, second information (that is, information different from the first information) indicating that the display device is displaying the video image.

The above arrangement advantageously allows the reproduction device of the present invention to, upon receipt of the information from the display device, recognize, in the case where the display device is not displaying a video image fed by the reproduction device, that the display device is not displaying a video image fed by the reproduction device.

In order to solve the above problem, a recognition method of the present invention is a recognition method by which a reproduction device for reproducing a video image recognizes a state of a display device for displaying the video image, the recognition method including the steps of: (a) feeding a reproduced video image to the display device; and (b) instructing the display device to, in a case where the display device is not displaying the video image fed in the step (a), return, to the reproduction device, information indicating that the display device is not displaying the video image fed in the step (a).

The above arrangement allows the recognition method of the present invention to achieve an operation effect similar to that achieved by the reproduction device of the present invention.

### Advantageous Effects of Invention

The reproduction device of the present invention is, as described above, capable of recognizing the state of a display device not displaying a reproduction video image that the reproduction device is feeding to the display device.

### Brief Description of Drawings

Fig. 1

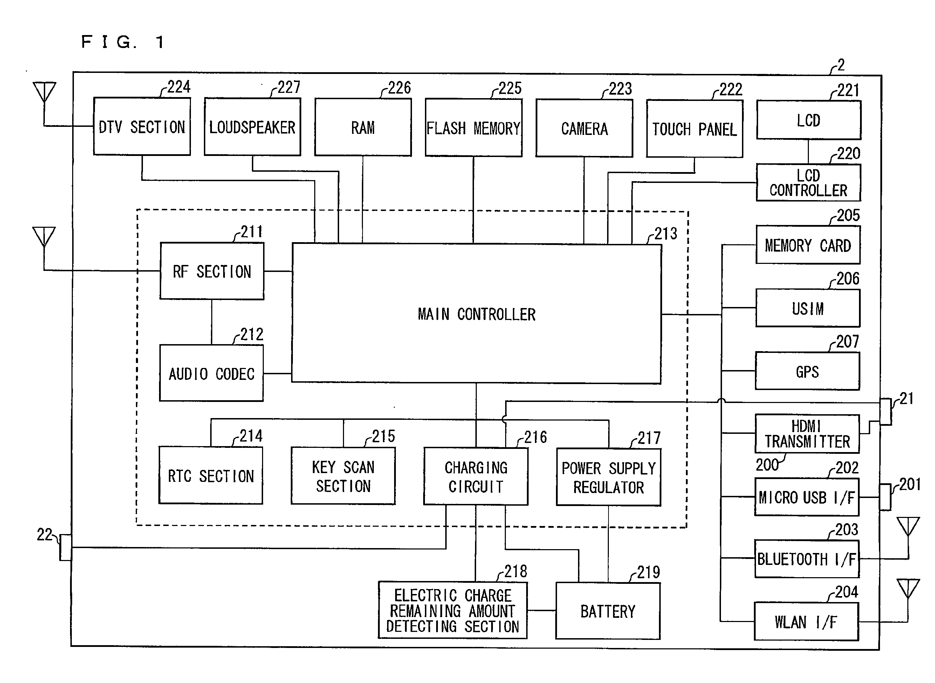

   Fig. 1 is a block diagram illustrating a configuration of a mobile telephone terminal of an embodiment of the present invention.
Fig. 2

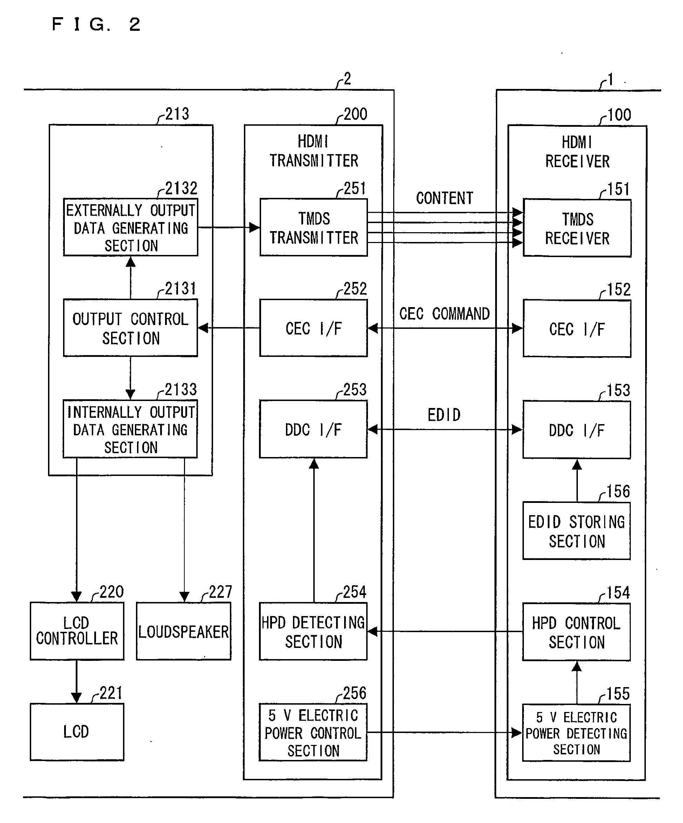

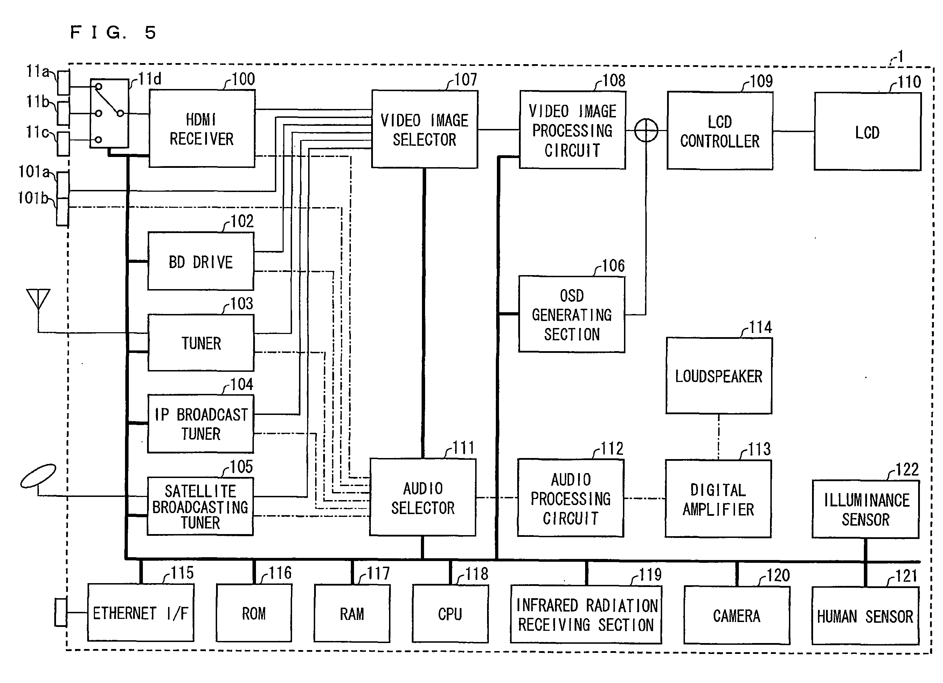

   Fig. 2 is a diagram illustrating respective configurations of (i) a main controller and (ii) an HDMI transmitter of the mobile telephone terminal and (iii) an HDMI receiver of the television (television receiver) illustrated in Fig. 5.
Fig. 3

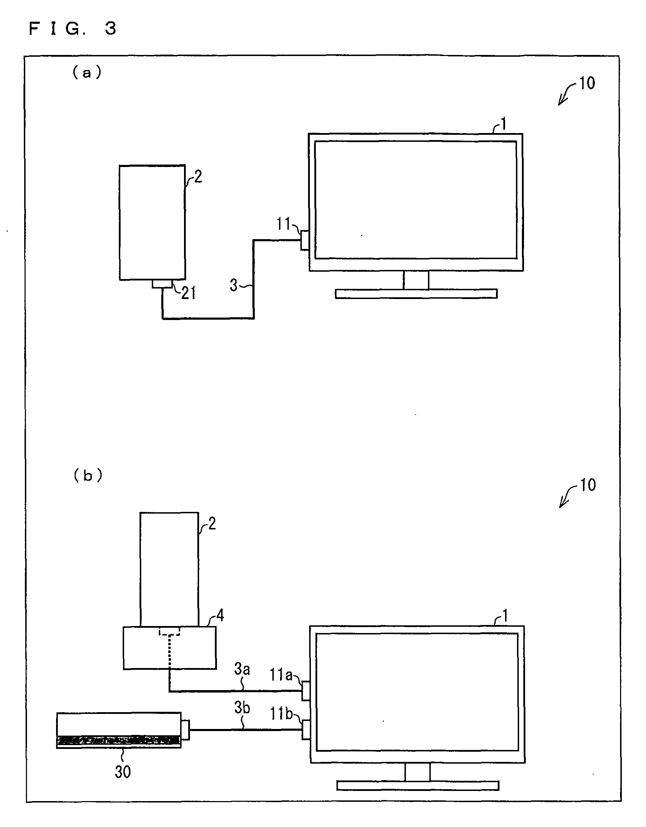

   Fig. 3 shows diagrams each illustrating a configuration of a system including the mobile telephone terminal illustrated in Fig. 1 and the television illustrated in Fig. 5, where (a) illustrates a system in which a mobile telephone terminal and a television are HDMI-connected to each other, and (b) illustrates a system in which a mobile telephone terminal and a BD (blu-ray disc) player are HDMI-connected to a television.
Fig. 4

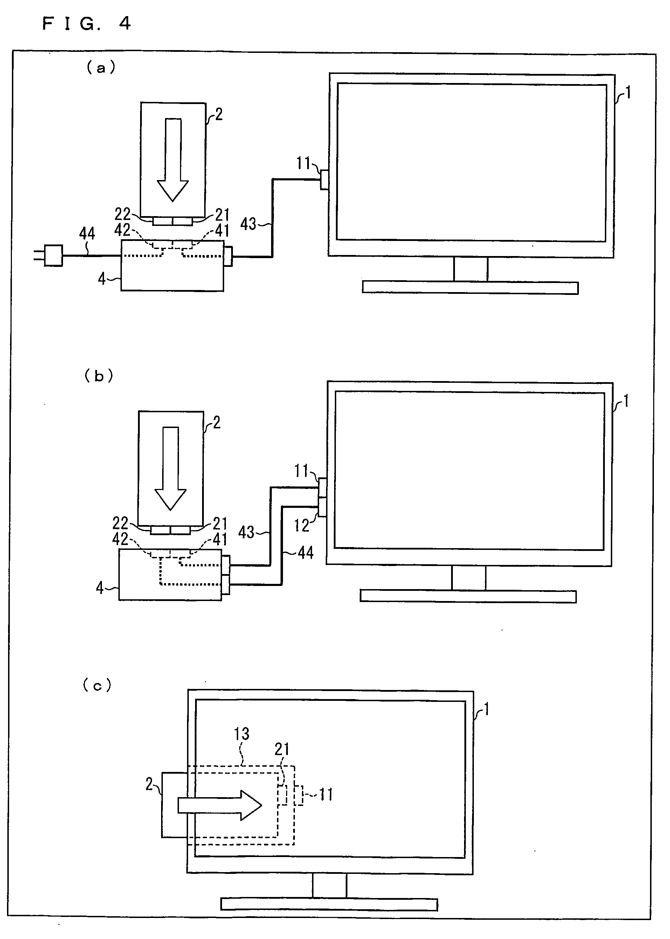

   Fig. 4 shows diagrams illustrating other manners of connection between a television and a mobile telephone terminal, where (a) illustrates a connection manner involving use of a charger stand, (b) illustrates a connection manner involving use of a charger stand supplied with electric power from a television, and (c) illustrates a connection manner in which a mobile telephone terminal is loaded in a slot of a television.
Fig. 5
   Fig. 5 is a block diagram illustrating a configuration of the television illustrated in Figs. 3 and 4.
Fig. 6

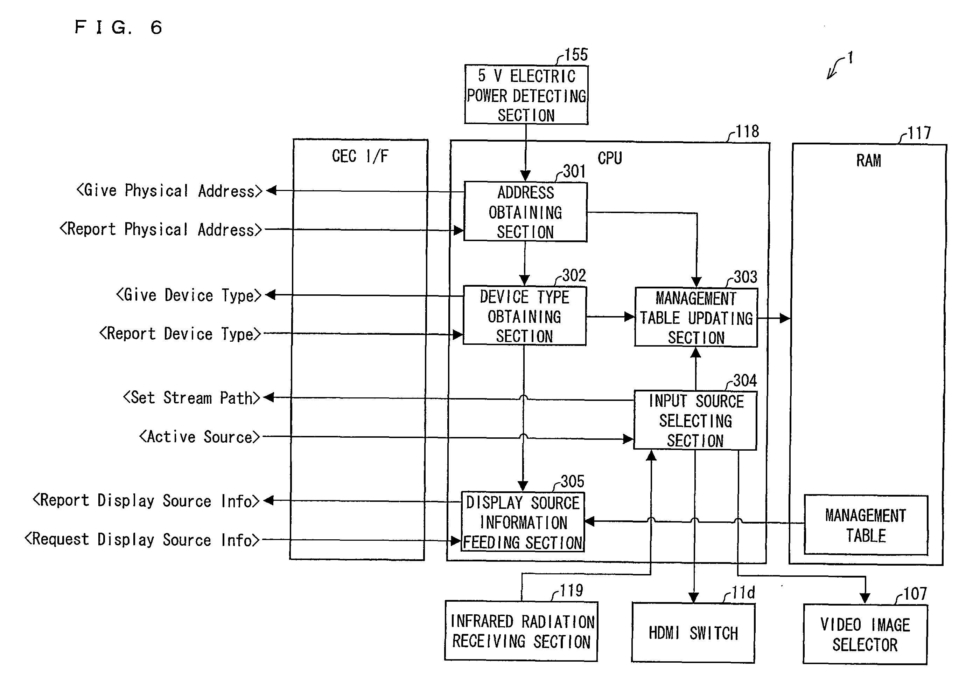

   Fig. 6 is a functional block diagram illustrating functions that the television (television receiver) illustrated in Fig. 5 has.
Fig. 7

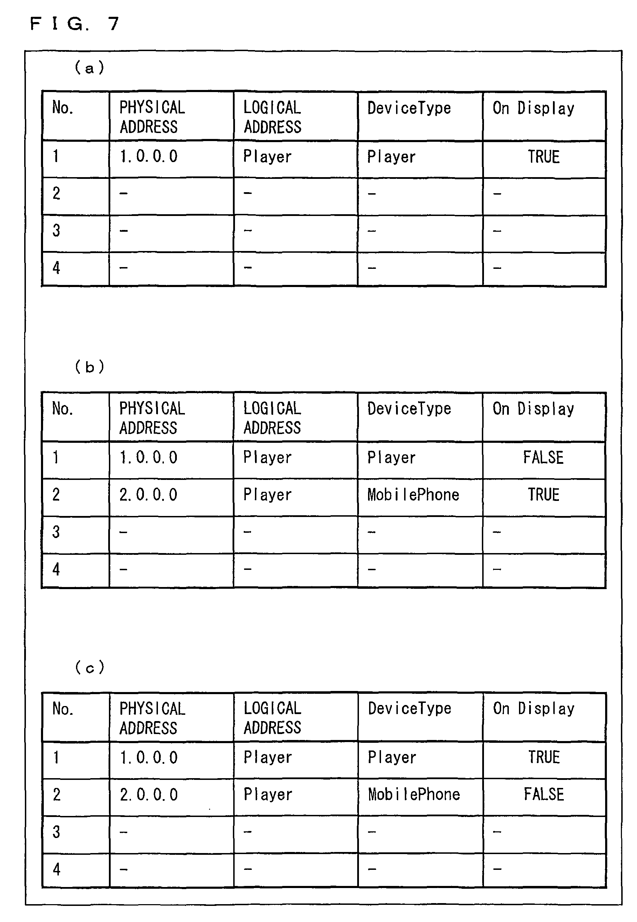

   Fig. 7 shows diagrams each illustrating a makeup and content of a management table that the television illustrated in Fig. 5 uses, where (a) illustrates example content of a management table occurring before a mobile telephone terminal becomes HDMI-connected to the television, (b) illustrates content of an updated management table for the case in which a mobile telephone terminal has become HDMI-connected to the television in the state where the management table is as illustrated in (a), and (c) illustrates content of an updated management table for the case in which a video image displayed by an LCD of the television has been switched to a video image from a BD player in the state where the management table is as illustrated in (a).
Fig. 8

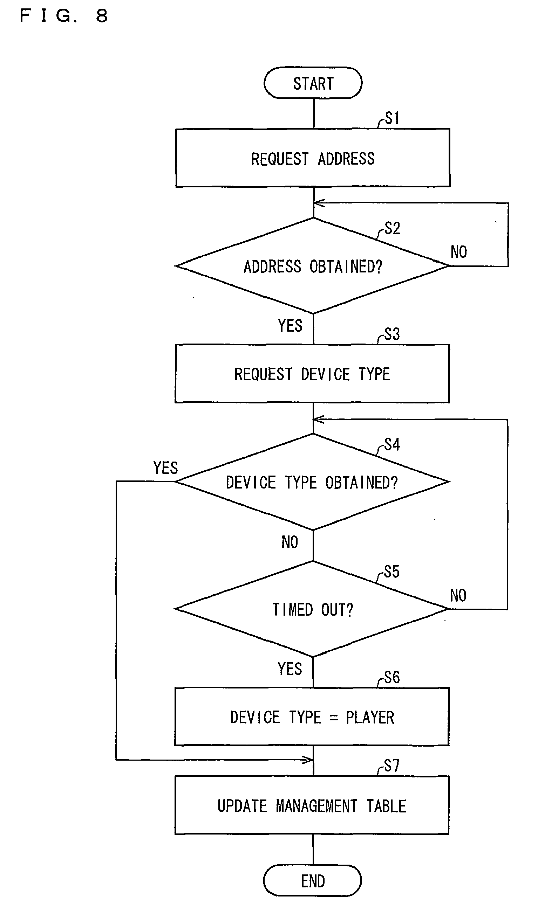

   Fig. 8 is a flowchart illustrating an example of a management table updating process carried out by the television of Fig. 5 in the case where a mobile telephone terminal has become HDMI-connected to the television.
Fig. 9

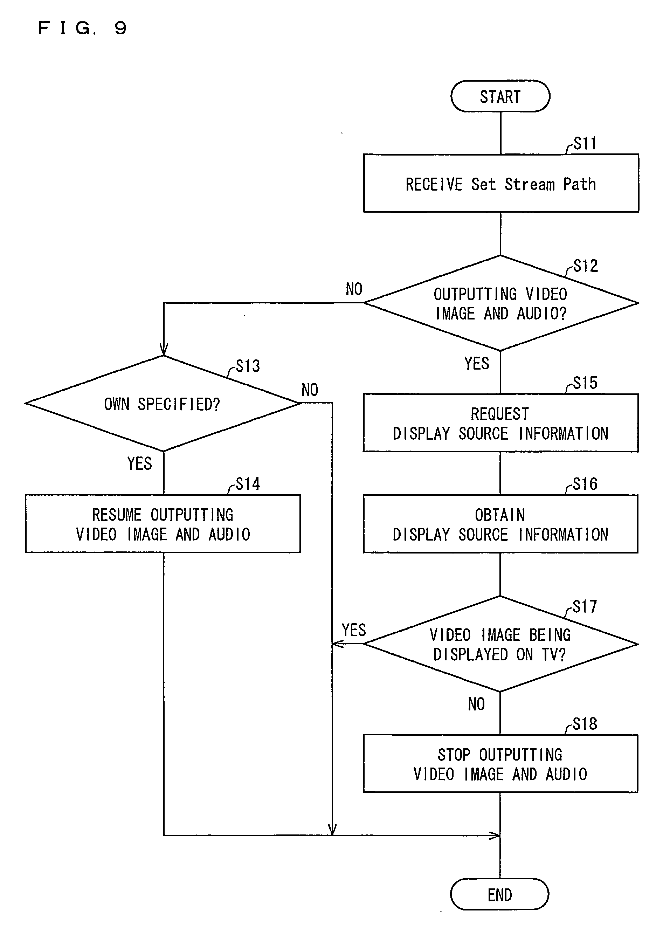

   Fig. 9 is a flowchart illustrating an operation carried out, in the case where the user has performed an operation with respect to the television of Fig. 5 to switch inputters of a video image to be displayed by a mobile telephone terminal HDMI-connected to the television.
Fig. 10

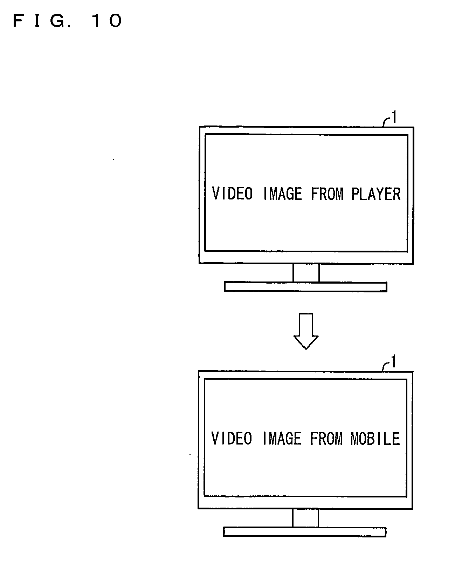

   Fig. 10 is a diagram schematically illustrating switch of video image inputters from a BD player to a mobile telephone terminal as a result of the user's operation.
Fig. 11

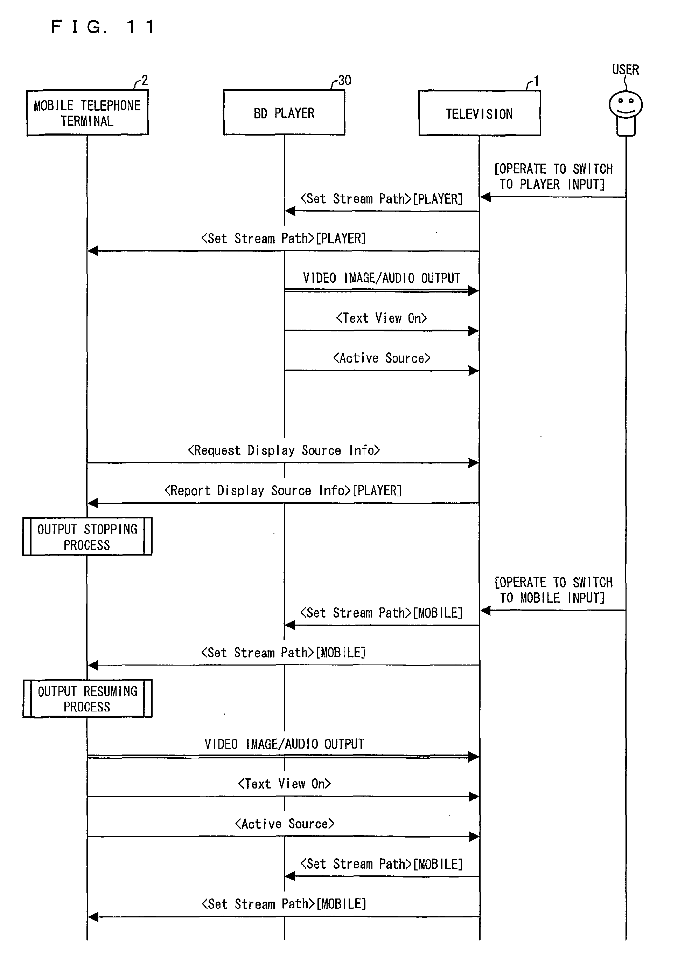

   Fig. 11 is a diagram of a sequence including an operation carried out, in the case where the inputters of a video image for the television illustrated in Fig. 5 are switched as illustrated in Fig. 10, between a mobile telephone terminal, a BD player, and the television.
Fig. 12

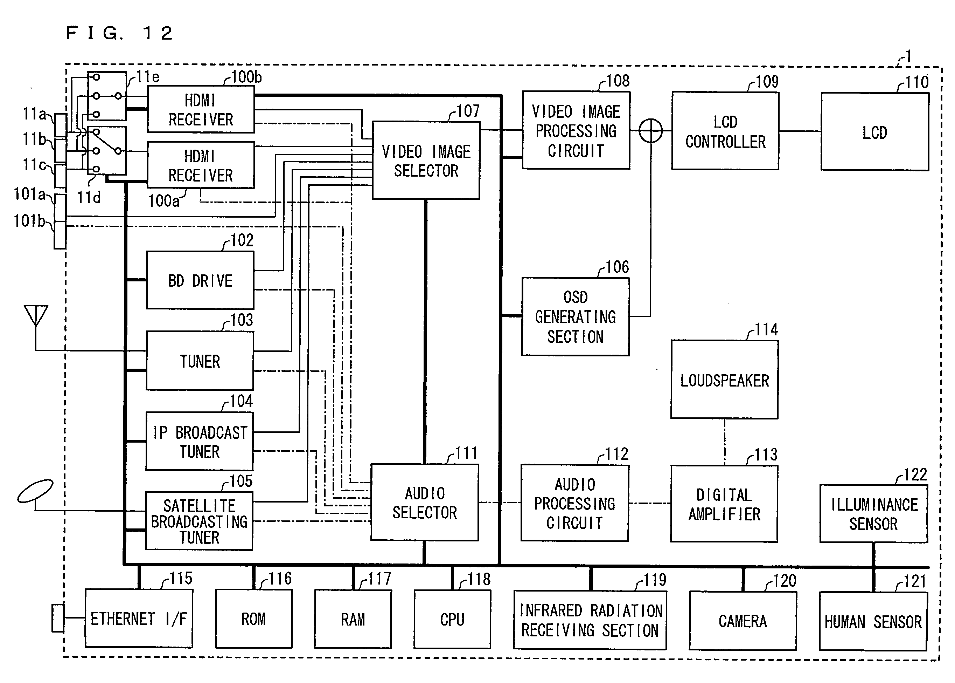

   Fig. 12 is a block diagram illustrating a configuration of a television that is different from the television illustrated in Fig. 5 and that has a dual screen display function.
Fig. 13

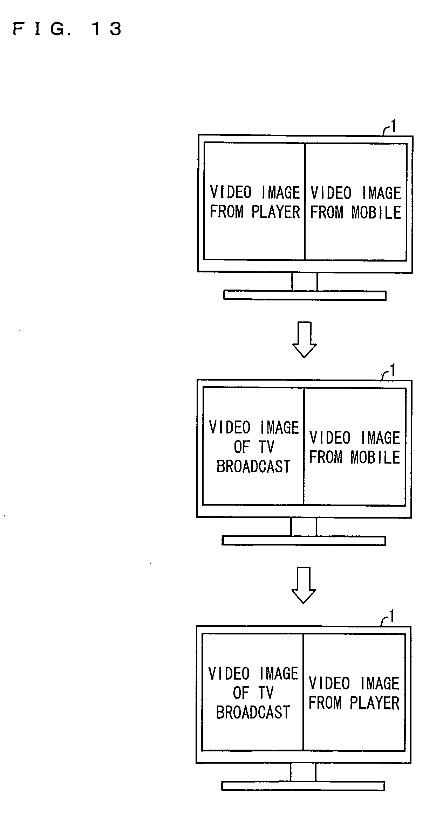

   Fig. 13 is a diagram schematically illustrating (i) switch, from a BD player to a tuner of a television, of one of the inputters of a video image to be displayed on the dual screens of the television illustrated in Fig. 12 and (ii) switch of the other inputter from a mobile telephone terminal to a BD player.
Fig. 14

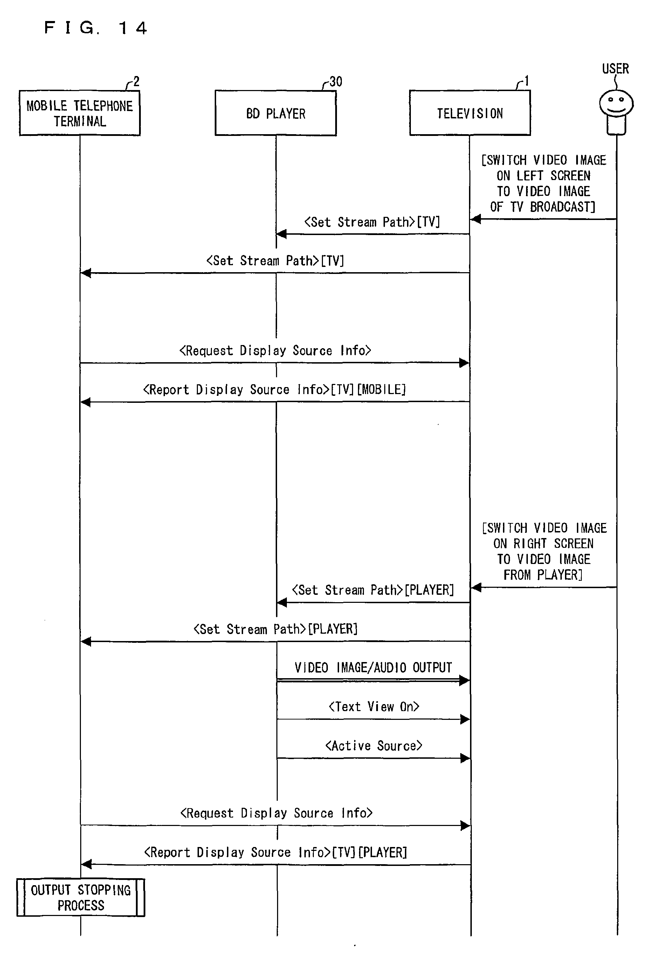

   Fig. 14 is a diagram of a sequence including an operation carried out, in the case where the inputters of a video image for the television illustrated in Fig. 12 are switched as illustrated in Fig. 13, between a mobile telephone terminal, a BD player, and the television.
Fig. 15

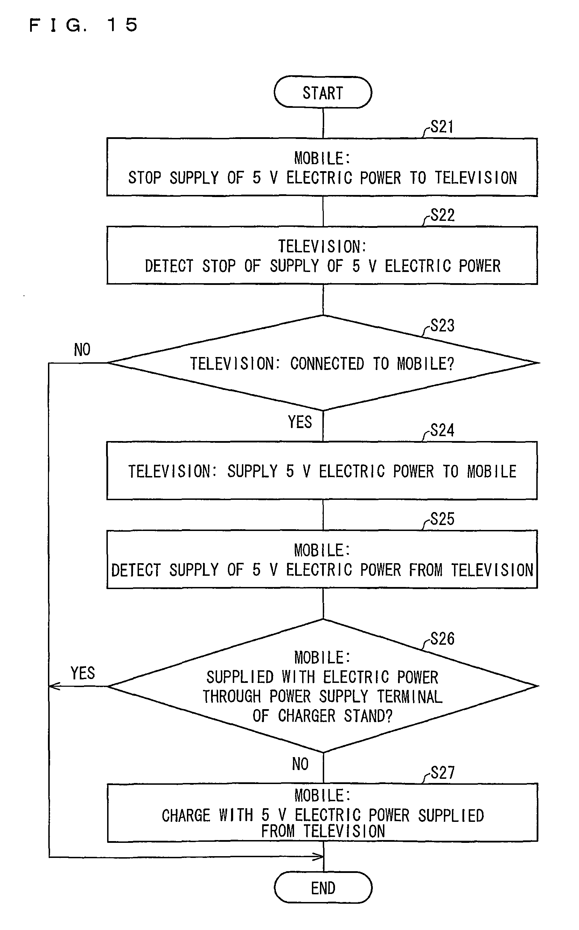

   Fig. 15 is a flowchart illustrating a process of charging a mobile telephone terminal, the process being carried out by the mobile telephone terminal and a television in coordination with each other in the case where a video image fed from the mobile telephone terminal to the television has stopped being displayed by a screen of the television.
Fig. 16

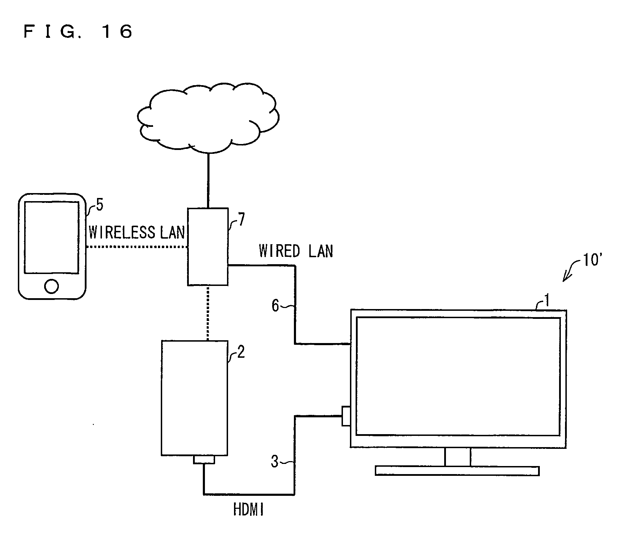

   Fig. 16 is a block diagram illustrating an example of implementing a system in which the user can operate a television and a source device with use of a portable information terminal.
Fig. 17

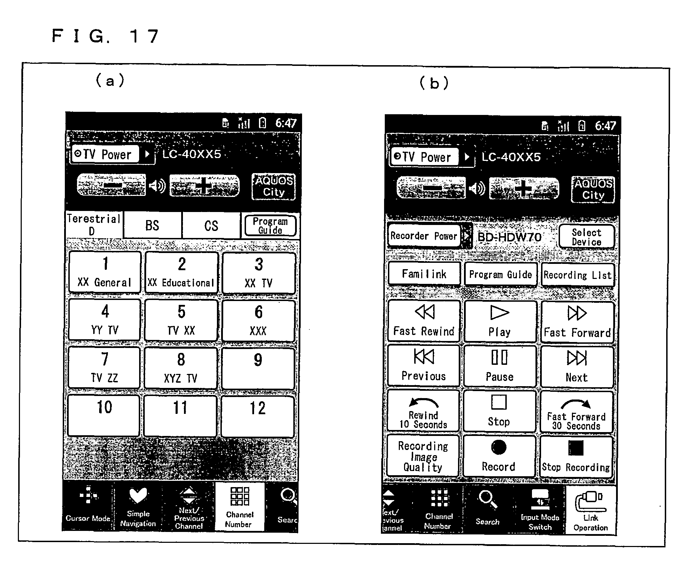

   Fig. 17 shows diagrams each illustrating an example makeup of a display screen to be displayed on a touch panel of a portable information terminal, where (a) is a display screen for operating a television and (b) is a display screen for operating a source device.

### Description of Embodiments

The description below deals with an embodiment of the present invention with reference to the drawings. The description below takes (i) a television receiver (hereinafter referred to as "television") as an example sink device (output device) and (ii) a mobile telephone terminal as an example source device. The present invention is, however, not limited by such examples. The mobile telephone terminal, in particular, serves as a mere example of a device that functions as a source device, and can be replaced by another device such as a PDA (personal digital assistant), a portable digital audio player, and a car navigation system (mobile terminal device).

### [System Configuration]

With reference to Fig. 3, the description below deals with an arrangement of a system 10 including a television 1 and a mobile telephone terminal 2. Fig. 3 is a diagram illustrating configurations of the system 10.

The system 10, as illustrated in (a) of Fig. 3, includes: a television 1 having an HDMI input terminal 11; and a mobile telephone terminal 2 having an HDMI output terminal 21. The system 10 is arranged such that the HDMI input terminal 11 of the television 1 and the HDMI output terminal 21 of the mobile telephone terminal 2 are connected to each other by an HDMI cable 3. In the system 10, the mobile telephone terminal 2 functions as a source device for feeding content to the television 1, whereas the television 1 functions as a sink device for outputting content fed by the mobile telephone terminal 2. The present embodiment assumes that content fed by the mobile telephone terminal 2 and outputted by the television 1 is either or both of a video image and an audio.

The system 10 may, as illustrated in (b) of Fig. 3, include: a television 1 having N (2 in the configuration of (b) of Fig. 3) HDMI input terminals 11a and 11b; and a total of N or fewer HDMI devices (one mobile telephone terminal 2 and one BD player 30 in the configuration of (b) of Fig. 3) including at least one mobile telephone terminal 2. In this case, the HDMI input terminals 11a and 11b of the television 1 are connected to the mobile telephone terminal 2 and the BD player 30 by HDMI cables 3a and 3b, respectively. The example illustrated in (b) of Fig. 3 is arranged such that placing the mobile telephone terminal 2 on a stand 4 (for example, a charger stand 4 described below) connects the mobile telephone terminal 2 to an end of the HDMI cable 3a to establish an HDMI connection between the television 1 and the mobile telephone terminal 2.

The manner of connecting the television 1 and the mobile telephone terminal 2 to each other with use of a charger stand 4 as illustrated in (b) of Fig. 3 is specifically exemplified by respective configurations of (a) and (b) of Fig. 4.

The charger stand 4 illustrated in (a) of Fig. 4 includes: an HDMI input terminal 41; and a power supply terminal 42. Placing the mobile telephone terminal 2 connects the HDMI output terminal 21 and a power supply terminal 22 of the mobile telephone terminal 2 to the HDMI input terminal 41 and the power supply terminal 42 of the charger stand 4, respectively. The HDMI input terminal 41 of the charger stand 4 is connected to an HDMI cable 43. Connecting the other end of the HDMI cable 43 to the HDMI input terminal 11 of the television 1 establishes an HDMI connection between the television 1 and the mobile telephone terminal 2. The power supply terminal 42 of the charger stand 4 is connected to a power supply cable 44. Connecting, to a commercial power supply, an AC adapter provided at the other end of the power supply cable 44 allows electric power to be supplied to the mobile telephone terminal 2.

The charger stand 4 illustrated in (b) of Fig. 4, similarly to the charger stand 4 illustrated in (a) of Fig. 4, includes: an HDMI input terminal 41; and a power supply terminal 42. Placing the mobile telephone terminal 2 connects the HDMI output terminal 21 and a power supply terminal 22 of the mobile telephone terminal 2 to the HDMI input terminal 41 and the power supply terminal 42 of the charger stand 4, respectively. The HDMI input terminal 41 is connected to an end of an HDMI cable 43. Connecting the other end of the HDMI cable 43 to the HDMI input terminal 11 of the television 1 can establish an HDMI connection between the television 1 and the mobile telephone terminal 2. The power supply terminal 42 is connected to an end of a power supply cable 44. Connecting the other end of the power supply cable 44 to an AC adapter 12 contained in the television 1 allows electric power to be supplied to the mobile telephone terminal 2. The HDMI cable 43 and the power supply cable 44 may be integrated with each other so that the system 10 can simultaneously achieve establishment of an HDMI connection and supply of electric power with use of a single cable.

The configuration as illustrated in (c) of Fig. 4, that is, a configuration in which a direct HDMI connection is established between the television 1 and the mobile telephone terminal 2 without use of the HDMI cable 3, may be selected. The television 1 illustrated in (c) of Fig. 4 includes a slot 13. Loading the mobile telephone terminal 2 in the slot 13 directly connects the HDMI output terminal 21 of the mobile telephone terminal 2 to the HDMI input terminal 41, provided inside the slot 13, of the television 1. The mobile telephone terminal 2 is not necessarily loaded in the television 1 at a side surface thereof. The mobile telephone terminal 2 may instead be loaded in a bezel section (specifically, a portion thereof located below the LCD) of the television 1 toward its front.

### [Arrangement of Mobile Telephone Terminal]

The description below deals with an arrangement of the mobile telephone terminal 2 of the present embodiment with reference to Fig. 1. Fig. 1 is a block diagram illustrating a configuration of the mobile telephone terminal 2.

The mobile telephone terminal 2, as illustrated in Fig. 1, includes: an HDMI output terminal 21; a power supply terminal 22; an HDMI transmitter 200; a micro USB terminal 201; a micro USB I/F 202; a Bluetooth I/F 203; a WLAN (wireless LAN) I/F 204; a memory card 205 (detachable); a USIM (universal subscriber identity module) card 206 (detachable); a GPS (global positioning system) 207; an RF section 211; an audio CODEC 212; a main controller 213; a RTC (real time clock) section 214; a key scan section 215; a charging circuit 216; a power supply regulator 217; an electric charge remaining amount detecting section 218; a battery 219; an LCD controller 220; an LCD 221; a touch panel 222; a camera 223; a DTV section 224; a FLASH memory 225; a RAM 226; and a loudspeaker 227. Fig. 1 shows a dotted line that encircles blocks mounted on a main substrate together with the main controller 213.

The mobile telephone terminal 2 has (1) a calling function mainly carried out by the RF section 211 and the audio CODEC section 212, (2) an image sensing function mainly carried out by the camera 223, (3) a one-segment broadcast receiving function mainly carried out by the DTV section 225, (4) an electric power supplying function mainly carried out by the battery 219 and the power supply regulator 217, (5) a charging function mainly carried out by the power supply terminal 22, the HDMI output terminal 21, the charging circuit 216, the electric charge remaining amount detecting section 218, and the battery (rechargeable battery) 219, (6) a wireless telecommunications function mainly carried out by the Bluetooth I/F 203 or the WLAN I/F 204, (7) a position management function mainly carried out by the GPS 207, (8) a time management function mainly carried out by the RTC 214, and (9) a user operation detecting function mainly carried out by the key scan section 215 or the touch panel 222.

To carry out the above charging function, the charging circuit 216 is connected to the power supply terminal 22 and the HDMI output terminal 21, and can thus be supplied with electric power from either of the power supply terminal 22 and an HPD (hot plug detection) pin, that is, the 19th pin of the HDMI output terminal 21. The other functions are normal functions that a conventional mobile telephone terminal 2 has, and are not described here.

The mobile telephone terminal 2 has, in addition to the above functions, a content reproducing function for reproducing content. The mobile telephone terminal 2 is capable of reproducing such content as a still image, a moving image, and an audio. The mobile telephone terminal 2 reproduces a still image, a moving image, and an audio by, for instance, decoding still image data (for example, JPEG data), moving image data (for example, MPEG data), and audio data (for example, MP3 data) each read out by the main controller 213 from the FLASH memory 225. The mobile telephone terminal 2 may alternatively decode still image data, moving image data, and audio data each read out from, instead of the FLASH memory 225, (i) a USB device connected to the micro USB terminal or (ii) the memory card 205. The main controller 213 decodes content, and feeds the decoded content to the HDMI transmitter 200. The HDMI transmitter 200 transmits such content, fed by the main controller 213, to the television 1 connected to the mobile telephone terminal 2 by the HDMI cable 3.

The mobile telephone terminal 2 further has the function of executing a communication application. The mobile telephone terminal 2 is capable of executing either of (i) a communication application that uses communication by the RF 211 section with a base station and (ii) a communication application that uses short-distance wireless telecommunication by the Bluetooth I/F 203 or the WLAN I/F 204. The mobile telephone terminal 2 is capable of including, either as the former communication application or as the latter communication application, an application that uses the Internet. Specific examples of the above communication application include not only general applications such as an electronic mail client and a web browser, but also special-purpose applications that permit use of various web services.

The main controller 213 carries out a cooperative operation with the television 1 by, for example, (i) carrying out a CEC command received by the HDMI transmitter 200 from the television 1 and (ii) generating a CEC command to be transmitted by the HDMI transmitter 200 to the television 1. In the case where, for instance, the HDMI transmitter 200 has received a <Give Physical Address> command, the main controller 213 causes the HDMI transmitter 200 to transmit a <Report Physical Address> command including the physical address and logical address (Playback Device) of the mobile telephone terminal 2 as an argument as an argument. In the case where the HDMI transmitter 200 has received a <Give Device Type> command, the main controller 213 causes the HDMI transmitter 200 to transmit a <Report Device Type> command including the device type (Mobile Phone) of the mobile telephone terminal 2 as an argument. The main controller 213, in the case where it has received a <Set Stream Path> command via the CEC I/F 252 while feeding content, causes the HDMI transmitter 200 to transmit a <Request Display Source Info> command (directive command) that requests display source information indicative of whether the content being fed is being displayed by an LCD 110 of the television 1. The cooperative operation carried out by the television 1 and the mobile telephone terminal 2 with use of CEC commands will be described later in detail with reference to a drawing other than Fig. 1.

### [Arrangement of Television]

The description below deals with an arrangement of the television 1 of the present embodiment with reference to Fig. 5. Fig. 5 is a block diagram illustrating a configuration of the television 1.

The television 1, as illustrated in Fig. 5, includes: three HDMI input terminals 11a through 11c; an HDMI switch 11d; an HDMI receiver 100; a video image input terminal 101a; an audio input terminal 101b; a BD drive 102; a tuner 103; an IP broadcast tuner 104; a satellite broadcasting tuner 105; an OSD generating section 106; a video image selector 107; a video image processing circuit 108; an LCD controller 109; an LCD (liquid crystal display) 110; an audio selector 111; an audio processing circuit 112; a digital amplifier 113; a loudspeaker 114; an Ethernet (registered trademark) I/F 115; a ROM 116; a RAM 117; a CPU 118; an infrared radiation receiving section 119; a camera 120; a human sensor 121; and an illuminance sensor 122. Fig. 5 shows (i) a solid line to indicate a path for a video signal, (ii) a dash-dot line to indicate a path for an audio signal, and (iii) a thick line to indicate a path (bus) for data, a control signal and the like.

The video image selector 107 is fed with (1) a video image received by the HDMI receiver 100, (2) a video image inputted at the video image input terminal 101a, (3) a video image read out by the BD drive 102 from a BD (blu-ray disc), (4) a video image received by the (terrestrial digital broadcasting) tuner 103, (5) a video image received by the IP broadcast tuner 104, and (6) a video image received by the satellite broadcasting tuner 105. The audio selector 111 is fed with (1) an audio received by the HDMI receiver 100, (2) an audio inputted at the audio input terminal 101b, (3) an audio read out by the BD drive 102 from a BD, (4) an audio received by the tuner 103, (5) an audio received by the IP broadcast tuner 104, and (6) an audio received by the satellite broadcasting tuner 105.

The CPU 118 carries out selection control of determining (a) content inputted at which HDMI input terminal the HDMI receiver 101 is to receive, that is, content inputted at which HDMI input terminal the HDMI switch 11d is to feed to the HDMI receiver 100, (b) content transmitted through which channel the tuner 103 is to receive, (c) content delivered by which server the IP broadcast tuner 104 is to receive, and (d) content transmitted through which channel the satellite broadcasting tuner 105 is to receive. The CPU 118 further carried out reproduction control over (e) play, pause, fast forward, rewind, chapter transition and the like at the BD drive 102.

The video image selector 107 selects one of (1) a video image fed from the HDMI receiver 100, (2) a video image fed from the video image input terminal 101a, (3) a video image fed from the BD drive 102, (4) a video image fed from the tuner 103, (5) a video image fed from the IP broadcast tuner 104, and (6) a video image fed from the satellite broadcasting tuner 105. The video image selected by the video image selector 107 is fed to the video image processing circuit 108. Which video image the video image selector 107 selects is controlled by the CPU 118.

The video image processing circuit 108 adjusts image quality of a video image fed from the video image selector 107. The video image processing circuit 108 also carries out scaling with respect to a video image fed from the video image selector 107. The adjustment of image quality refers to changing at least one of, for example, luminance, sharpness, and contrast. The scaling refers to reducing the size of a video image to be displayed while keeping the original aspect ratio of such a video image. The video image that has been subjected to image quality adjustment and scaling by the video image processing circuit 108 is fed to the LCD controller 109. How the video image processing circuit 108 changes image quality of a video image and how much the video image processing circuit 108 reduces the size are controlled by the CPU 118.

The LCD controller 109 drives the LCD 110 so that the LCD 110 displays a video image fed from the video image processing circuit 108. Driving the LCD 110 as such causes a video image selected by the video image selector 107 to be outputted by the LCD 110. The LCD controller 109, in the case where it has been fed with an OSD image by the OSD generating section 106, causes the LCD 110 to display the OSD image, fed by the OSD generating section 106, in such a manner that the OSD image is superimposed over a video image fed from the video image processing circuit 108.

The audio selector 111 selects one of (i) an audio fed from the HDMI receiver 100, (ii) an audio fed from the video image input terminal 101a, (iii) an audio fed from the BD drive 102, (iv) an audio fed from the tuner 103, (v) an audio fed from the IP broadcast tuner 104, and (vi) an audio fed from the satellite broadcasting tuner 105. The audio selected by the audio selector 111 is fed to the audio processing circuit 112. Which audio the audio selector 111 selects is controlled by the CPU 118. Note that there is a link between the selection of a video image by the video image selector 107 and the selection of an audio by the audio selector 111: In the case where, for instance, the video image selector 107 selects a video image fed from the HDMI receiver 100, the audio selector 111 selects an audio fed also from the HDMI receiver 100.

The audio processing circuit 112 adjusts the volume and sound quality of an audio fed from the audio selector 111. The adjustment of sound quality refers to changing the frequency characteristic (for example, emphasizing a low-frequency range or high-frequency range) of an audio fed from the audio selector 111. The audio having a volume and sound quality each adjusted by the audio processing circuit 112 is fed to the digital amplifier 113. How the audio processing circuit 112 changes the volume and sound quality is controlled by the CPU 118.

The digital amplifier 113 drives the loudspeaker 114 so that the loudspeaker 114 outputs an audio fed from the audio processing circuit 112. Driving the loudspeaker 114 as such causes the loudspeaker 114 to output an audio selected by the audio selector 111.

The CPU 118 controls the above individual sections in accordance with (i) a remote control signal received by the infrared radiation receiving section 119, (ii) an image captured by the camera 120, (iii) a sensor signal outputted by the human sensor 121, and (iv) a sensor signal outputted by the illuminance sensor 122. The sensor signal of the human sensor 121 is a binary signal indicative of whether a viewer is present within a sensing range of the human sensor 121. The sensor signal of the illuminance sensor 122 is a multilevel signal indicative of illuminance (brightness) of an area surrounding the illuminance sensor 122. The infrared radiation receiving section 119 can be used for such control as (i) control of switching, in accordance with a remote control signal, a channel to be selected by the tuner 104 and (ii) control of switching, in accordance with a remote control signal, a video image and an audio to be selected by the video image selector 107 and the audio selector 111, respectively. The camera 120 can be used for such control as control of switching, in correspondence with a viewer specified on the basis of an image captured, how the video image processing circuit 108 adjusts image quality. The human sensor 121 can be used for such control as control of switching, in correspondence with a sensing result, whether to turn on or off a backlight for the LCD 110.

The CPU 118 also achieves a cooperative operation with the mobile telephone terminal 2 by, for example, (i) carrying out a CEC command received by the HDMI receiver 100 from the mobile telephone terminal 2 and (ii) generating a CEC command to be transmitted to the mobile telephone terminal 2 by the HDMI receiver 100. The cooperative operation carried out by the television 1 and the mobile telephone terminal 2 with use of CEC commands will be described later in detail with reference to a drawing other than Fig. 5.

The ROM 116 is a readable and unwritable memory that stores fixed data such as programs to be executed by the CPU 118. The ROM 116 also stores data, such as JPEG data and SVG (scalable vector graphics) data, referred to by the OSD generating section 106 to generate an OSD image. The RAM 117 is a readable and writable memory that stores variable data such as (i) data referred to by the CPU 118 for an arithmetic operation and (ii) data generated by the CPU 118 through an arithmetic operation.

The Ethernet I/F 115 is an interface for connecting the television 1 to a network. The IP broadcast tuner 105 described above accesses a server on the Internet through the Ethernet I/F 115.

### [Details of Main Controller of Mobile Telephone Terminal]

With reference to Fig. 2, the description below deals in greater detail with (i) the HDMI receiver 100 included in the television 1, (ii) the HDMI transmitter 200 included in the mobile telephone terminal 2, and (iii) the main controller 213 included in the mobile telephone terminal 2. Fig. 2 is a block diagram illustrating (i) respective configurations of the main controller 213 and the HDMI transmitter 200 of the mobile telephone terminal 2 and (ii) a configuration of the HDMI receiver 100 included in the television 1.

The HDMI cable 3 includes: TMDS (transition minimized differential signaling) lines for transmitting content (that is, a video signal and an audio signal); a CEC line for transmitting a CEC (consumer electronics control) command; a DDC (display data cannel) line for transmitting EDID (extended display identification data); an HPD line for transmitting an HPD (hot plug detect) signal; and a 5 V electric power line having a voltage (potential with respect to ground potential) controlled at 5 V by a source device for connection detection.

The HDMI receiver 100 includes: a TMDS receiver 151; a CEC I/F 152; a DDC I/F 153; an HPD control section 154; a 5 V electric power detecting section 155; and an EDID storing section 156. The individual sections of the HDMI receiver 100 are controlled by the CPU 118.

The TMDS receiver 151 is an interface for receiving content transmitted through the TMDS lines of the HDMI cable 3. The content received by the TMDS receiver 151 is then fed to the video image selector 107 and the audio selector 111.

The CEC I/F 152 is an interface for receiving a CEC command transmitted through the CEC line of the HDMI cable 3. The CEC command received by the CEC I/F 152 is then fed to the CPU 118. The CEC I/F 152 further serves as an interface for transmitting a CEC command through the CEC line of the HDMI cable 3. The CEC command to be transmitted by the CEC I/F 152 is fed from the CPU 118.

The DDC I/F 153 is an interface for transmitting EDID through the DDC line of the HDMI cable 3. The EDID to be transmitted by the DDC I/F 153 is read out from the EDID storing section 156.

The 5 V electric power detecting section 155 monitors the voltage of a 5 V electric power pin to which the 5 V electric power line of the HDMI cable 3 is connected, and detects timing of the rise of the voltage. The 5 V electric power detecting section 155, in the case where it has detected that the voltage of the 5 V electric power pin has risen to 5 V, notifies the CPU 118 and the HPD control section 154 that connection with the HDMI transmitter 200 has been established. The HPD control section 154, upon receipt of such a notification from the 5 V electric power detecting section 155, raises, to a H level, the voltage of an HPD pin to which the HPD line of the HDMI cable 3 is connected. The HDMI transmitter 200, in the case where the voltage of the HPD pin connected to the HPD line of the HDMI cable 3 has risen to the H level, reads out, through the DDC line, EDID stored in the EDID storing section 156 of the HDMI receiver 100.

### (Details of HDMI Transmitter 200)

The HDMI transmitter 200 includes: a TMDS transmitter 251; a CEC I/F 252; a DDC I/F 253; an HPD detecting section 254; and a 5 V electric power control section 255. The individual sections of the HDMI transmitter 200 are controlled by the main controller 213.

The TMDS transmitter 251 is an interface for transmitting content through the TMDS lines of the HDMI cable 3. The content to be transmitted by the TMDS transmitter 251 is content decoded by the main controller 213.

The CEC I/F 252 is an interface for receiving a CEC command transmitted through the CEC line of the HDMI cable 3. The CEC command received by the CEC I/F 252 is then fed to the main controller 213. The CEC I/F 252 further serves as an interface for transmitting a CEC command through the CEC line of the HDMI cable 3. The CEC command to be transmitted by the CEC I/F 252 is fed from the main controller 213.

The DDC I/F 253 is an interface for receiving EDID transmitted through the DDC line of the HDMI cable 3. The EDID received by the DDC I/F 253 is then transmitted to the RAM 226 via the main controller 213 for storage.

The 5 V electric power control section 255, in order to be able to detect that the HDMI receiver 100 has been connected to the HDMI transmitter 200, controls, at 5 V, the voltage of the 5 V electric power pin connected to the 5 V electric power line of the HDMI cable 3. The HPD detecting section 254 monitors the voltage of the HPD pin to which the HPD line of the HDMI cable 3 is connected, and detects timing of the rise of the voltage. The HPD detecting section 254, in the case where it has detected that the voltage of the HPD pin has risen to the H level, notifies the main controller 213 and the DDC I/F 253 that connection with a sink device has been established. The DDC I/F 253, upon receipt of such a notification from the HPD detecting section 254, reads out, through the DDC I/F of the HDMI receiver 100, EDID stored in the EDID storing section 156.

A CEC command transmitted and received to and from devices connected to each other via an HDMI cable includes, as an argument, the logical address and/or physical address of a transmitter and/or receiver. The devices connected to each other via an HDMI cable each specify, with reference to the logical address and/or physical address included in a CEC command, the transmitter and/or receiver of that CEC command.

The above logical address is expressed as an integer of 0 to 14, the integer indicating a device category (a television, a recorder, a player, a tuner, or an audio device). For instance, the logical address "0" is assigned to a television, the logical address "1" is assigned to a first recorder, and the logical address "2" is assigned to a second recorder. The logical address corresponds to the device category in the relationship defined in the table below. The present specification refers to "TV", "Recording Devices 1 through 3", "Playback Devices 1 through 3", "Tuners 1 through 4", and "Audio System" in the table below also as "television", "recorders", "players", "tuners", and "audio", respectively.

**Table 1**

| Logical Address | Device Category |
|---|---|
| 0 | TV |
| 1 | Recording Device 1 |
| 2 | Recording Device 2 |
| 3 | Tuner 1 |
| 4 | Playback Device 1 |
| 5 | Audio System |
| 6 | Tuner 2 |
| 7 | Tuner 3 |
| 8 | Playback Device 2 |
| 9 | Recording Device 3 |
| 10 | Tuner 4 |
| 11 | Playback Device 3 |
| 12 | Reserved |
| 13 | Reserved |
| 14 | Specific Use |
| 15 | Unregistered |

The above physical address is expressed as a four-digit natural number indicative of a path from a source device. For instance, the physical address (x,0,0,0) is assigned to a source device X connected to the x-th HDMI input terminal of a sink device (television), and the physical address (x,y,0,0) is assigned to a source device Y connected to the y-th HDMI input terminal of the source device X. In the configuration illustrated in Fig. 4, the physical address (1,0,0,0) is assigned to the source device connected to the HDMI input terminal 11a, and the physical address (2,0,0,0) is assigned to the source device connected to the HDMI input terminal 11b. The physical address (0,0,0,0) is assigned to the television as a sink device.

### (Details of Main Controller 213)

The main controller 213 includes: an output control section 2131; an external output data generating section 2132; and an internal output data generating section 2133.

The external output data generating section 2132 generates an external output, that is, (i) a video signal for content, the video signal corresponding to resolution of the LCD 100 of the television 1, and (ii) an audio signal for the content. The external output data generating section 2132 thus outputs the external output to the TMDS transmitter 251. The resolution has a value that is either a resolution value recorded in the television 1 as EDID or a resolution value retained in the RAM 226 by the mobile telephone terminal 2 itself for external output.

The internal output data generating section 2133 generates an internal output, that is, (i) a video signal for content, the video signal corresponding to resolution of the LCD 221 of the mobile telephone terminal 2, and (ii) an audio signal for the content. The internal output data generating section 2133 thus outputs (i) the generated audio signal for the content to the loudspeaker 227 and (ii) the video signal for the content to the LCD controller 220.

The output control section 2131, in the case where it has received a <Set Stream Path> command through the CEC I/F 252 while the content generated by the external output data generating section 2132 is being fed to the television 1, transmits, through the CEC I/F 252, a <Request Display Source Info> command that requests display source information indicative of whether the content being fed is being displayed by the LCD 110 of the television 1. The output control section 2131, upon receipt of display source information as a <Report Display Source Info> command through the CEC I/F 252, determines whether the display source information indicates that the content being fed is being displayed by the LCD 110 of the television 1 or that the content being fed is not being displayed by the LCD 110. The <Request Display Source Info> command and the <Report Display Source Info> command are novel vendor commands disclosed in the present invention.

The output control section 2131, in correspondence with a result of the determination about the display source information, either causes (i) the external output data generating section 2132 to continue to generate content and (ii) the TMDS transmitter 251 to output the content or causes (i) the external output data generating section 2132 to stop the generation of content and (ii) the TMDS transmitter 251 to stop its process.

### (Functions of CPU of Television)

With reference to Fig. 6, the description below deals with functions that the CPU 118 of the television 1 has in order to achieve a systematic cooperative operation with the mobile telephone terminal 2. Fig. 6 is a functional block diagram illustrating the functions of the CPU 118 of the television 1. The block diagram of Fig. 6 merely illustrates part of various functions of the CPU 118. It is thus needless to say that the CPU 118 may have a function in addition to the functions shown in Fig. 6.

The CPU 118 of the television 1, as illustrated in Fig. 6, functions as an address obtaining section 301, a device type obtaining section 302, a management table updating section 303, an input source selecting section 304, and a display source information feeding section 305. The address obtaining section 301, the device type obtaining section 302, the management table updating section 303, and the display source information feeding section 305 operate with reference to a management table (as illustrated in (a) through (c) of Fig. 7) stored in the RAM 117. The management table stores, in association with one another for each source device HDMI-connected to the television 1, (i) a physical address and logical address (first device category information), (ii) a device type (second device category information), and (iii) information indicative of whether a video image being fed from the source device is being displayed by the LCD 110.

The device type refers to information indicative of a device category under which a source device falls in a classification different from that based on the logical address. The present embodiment uses, as the device type, information indicative of whether the source device is categorized as a portable device or a non-portable device. Any source device with a device type set to "Mobile Phone" in the management table is a portable device, whereas any other source device is a non-portable device (stationary device).

The address obtaining section 301 is means for obtaining, from a source device HDMI-connected to the television 1, the physical address and logical address of that source device. The address obtaining section 301, in the case where it has received, from the 5 V electric power detecting section 155, a notification to the effect that a source device has been newly HDMI-connected to the television 1, obtains, from that newly HDMI-connected source device, the physical address and logical address of the source device. The present embodiment uses, as a command for obtaining a physical address and logical address, a <Give Physical Address> command (common CEC command). The address obtaining section 301, after completing the obtaining of a physical address and logical address, notifies the management table updating section 303 of the obtained physical address and logical address, and further notifies the device type obtaining section 302 to the effect that the address obtaining section 301 has completed an address obtaining process.

The device type obtaining section 302 is means for obtaining, from a source device HDMI-connected to the television 1, the device type of that source device. The device type obtaining section 302, in the case where it has received, from the address obtaining section 301, a notification to the effect that the address obtaining section 301 has completed an address obtaining process, obtains, from the source device HDMI-connected to the television 1, the device type of that source device. The present embodiment uses, as a command for obtaining a device type, a <Give Device Type> command, which is a novel vendor command disclosed in the present invention. The device type obtaining section 302, after successfully obtaining a device type, notifies the management table updating section 303 of the obtained device type. The device type obtaining section 302, in the case where it has timed out without obtaining a device type, notifies the management table updating section 303 to the effect that the device type is "Player".

The management table updating section 303 registers, in the management table, (i) a physical address and logical address of which the management table updating section 303 has been notified by the address obtaining section 301 and (ii) a device type of which the management table updating section 303 has been notified by the device type obtaining section 302, in association with each other. Further, the management table updating section 303, in response to an instruction from the input source selecting section 304 described below, records, in the management table, in association with a physical address, a logical address, and a device type each already recorded, information (On Display information) indicative of whether a video image from a source device HDMI-connected to the television 1 is being displayed by the LCD 11.

In the case where a physical address of which the management table updating section 303 has been newly notified by the address obtaining section 301 is identical to an already registered physical address, the management table updating section 303 overwrites such an already registered physical address, the corresponding logical address, and the corresponding device type with (i) the physical address and logical address of which the management table updating section 303 has been newly notified by the address obtaining section 301 and (ii) a device type of which the management table updating section 303 has been newly notified by the device type obtaining section 302.

The input source selecting section 304 is means for, in response to (i) a request from a source device HDMI-connected to the television 1 or (ii) a request by a user operating the television 1, selecting, as an input source, one of source devices HDMI-connected to the television 1. The input source selecting section 304 also serves as means for, in response to a request by a user operating the television 1, causing the video image selector 107 to select, as an input source, one of the BD drive 102 and the various tuners 103 through 105 each included in the television 1 itself. The request from a source device is given by the CEC I/F 152 in the form of a CEC command, whereas the request by a user is given by the infrared radiation receiving section 119 in the form of a remote control signal. The present embodiment assumes an <Active Source> command as a CEC command for requesting switch of input sources.

The input source selecting section 304 also instructs the management table updating section 303 to record, in the management table as the On Display information, the value "True" (which indicates that a video image from a source device selected as an input source is being displayed by the LCD 11) in association with the physical address, logical address, and device type of the source device. The input source selecting section 304 further instructs the management table updating section 303 to update, to the value "False" (which indicates that a video image from a source device selected as an input source is not being displayed by the LCD 11), On Display information associated with the physical address, logical address, and device type of the source device.

In the case where, for instance, the mobile telephone terminal 2 has become HDMI-connected to the television 1 while the management table is as illustrated in (a) of Fig. 7, the input source selecting section 304 instructs the management table updating section 303 to record, in the management table as the On Display information, "True" in association with the physical address "2.0.0.0", logical address "Player", and device type "MobilePhone" of the mobile telephone terminal 2. The management table updating section 303 further instructs the management table updating section 303 to update, from "True" to "False", the On Display information associated with the physical address "1.0.0.0", logical address "Player", and device type "Player" of the BD player 3-. This operation causes the management table to look as illustrated in (b) of Fig. 7.

Further, in the case where, for instance, the BD player 30 has been selected as an input source as a result of a request by the user while the management table is as illustrated in (b) of Fig. 7, the input source selecting section 304 instructs the management table updating section 303 to update, to "False", the On Display information associated with the physical address "2.0.0.0", logical address "Player", and device type "MobilePhone" of the mobile telephone terminal 2. The management table updating section 303 further instructs the management table updating section 303 to update, to "True", the On Display information associated with the physical address "1.0.0.0", logical address "Player", and device type "Player" of the BD player 30. This operation causes the management table to look as illustrated in (c) of Fig. 7.

The input source selecting section 304, upon receipt of an <Active Source> command from any source device HDMI-connected to the television 1, (i) switches the input source to the source device specified by the physical address included in that <Active Source> command and (ii) transmits, to each source device connected to the television 1, a <Set Stream Path> command including the above physical address as an argument. The switch of the input source to the source device specified by the physical address (x,y,z,w) refers to controlling the HDMI switch 11d so that the x-th HDMI input terminal is connected to the HDMI receiver 100. The <Set Stream Path> command is transmitted in order to instruct each device interposed between (i) the television 1 and (ii) the source device, which has transmitted the <Active Source> command, to switch input sources so that a path runs between the television 1 and that source device.

The input source selecting section 304, in the case where it has received, through the infrared radiation receiving section 119 from the user operating the television 1, a request to select a source device to be an input source, similarly transmits, to each source device connected to the television 1, a <Set Stream Path> command including, as an argument, the physical address of the selected source device. The input source selecting section 304, in the case where it has received, from the user through the infrared radiation receiving section 119, a request to select, as an input source, one of the BD drive and the various tuners 103 through 105 each included in the television 1 itself, transmits, to each source device connected to the television 1, a <Set Stream Path> command including, as an argument, the physical address "0.0.0.0" of the television 1 itself.

The display source information feeding section 305, upon receipt of <Request Display Source Info>, refers to the management table to extract the physical address (identification information) of each record for which the On Display information is "True". In the case where, for instance, the management table is as illustrated in (b) of Fig. 7, the display source information feeding section 305 extracts the physical address "2.0.0.0". The <Request Display Source Info>, as described below, includes, as an argument, the physical address of the transmitter that has transmitted that <Request Display Source Info>. The display source information feeding section 305 also refers to the argument of <Request Display Source Info> to transmit <Report Display Source Info> to the transmitter of the <Request Display Source Info>. The display source information feeding section 305 is arranged to store, as the argument of a <Report Display Source Info> command to be transmitted, all previously extracted physical addresses.

### (Detail of Management Table Updating Process)

With reference to Fig. 8, the description below deals with a management table updating process carried out by the television 1 (specifically, the address obtaining section 301, device type obtaining section 302, and the management table updating section 303) when an HDMI connection has been established with a source device. Fig. 8 is a flowchart illustrating a flow of the management table updating process carried out by the television 1. The following describes one by one the individual steps included in the flowchart illustrated in Fig. 8.

Step S1: The address obtaining section 301, in the case where it has received, from the 5 V electric power detecting section 155, a notification to the effect that connection with a source device has been established, transmits a <Give Physical Address> command to that source device.

Step S2: The address obtaining section 301 waits for a response to the <Give Physical Address> command from the source device. The address obtaining section 301, upon receipt of a <Report Physical Address> command, notifies the management table updating section 303 of the physical address and logical address (device category information) each included in the <Report Physical Address> command as an argument, and further notifies the device type obtaining section 302 to the effect that the address obtaining section 301 has completed an address obtaining process.

Step S3: The device type obtaining section 302, upon receipt of the notification to the effect that the address obtaining section 301 has completed an address obtaining process, transmits a <Give Device Type> command to the source device.

Steps S4 and S5: The device type obtaining section 302 waits for a response to the <Give Device Type> command from the source device until the device type obtaining section 302 times out (Yes in step S5). The time-out refers to a predetermined time period (for example, 1 second) having elapsed after transmission of a <Give Device Type> command. The device type obtaining section 302, in the case where it has received a <Report Device Type> command before timing out, notifies the management table updating section 303 to the effect that the device type is "Mobile Phone". The device type of the present embodiment refers to information indicative of whether the issuer of a <Report Device Type> is a mobile telephone terminal. The device type has the value "Mobile Phone" in the case where the issuer of the <Report Device Type> is a mobile telephone terminal.

Step S6: The device type obtaining section 302, in the case where it has timed out before receiving a <Report Device Type> command, notifies the management table updating section 303 of a device category corresponding to the logical address obtained in the step S2.

Step S7: The management table updating section 303 records, in a management table, (i) the physical address and logical address of which the management table updating section 303 has been notified by the address obtaining section 301 in the step S2 and (ii) the device type of which the management table updating section 303 has been notified by the device type obtaining section 302 in the step S4 or S6, in association with one another.

### (Operation of Mobile Telephone Terminal 2)

With reference to Fig. 9, the description below deals with how the mobile telephone terminal 2 operates, not in response to an <Active Source> command, but upon receipt of a <Set Stream Path> command from the television 1.

Fig. 9 is a flowchart illustrating an operation of the mobile telephone terminal 2 for such a case.

Step S11: First, the output control section 2131 of the main controller 213 receives a <Set Stream Path> command through the CEC I/F 252 of the HDMI transmitter 200.

Step S12: The output control section 2131 determines whether the external output data generating section 2132 and the TMDS transmitter 251 are each carrying out a process. In the case where the output control section 2131 has determined that the external output data generating section 2132 and the TMDS transmitter 251 are each carrying out a process (that is, the TMDS transmitter 251 is transmitting a video image and audio for content to the television 1; YES in the step S12), the flow proceeds to the step S 15. In the case where the output control section 2131 has determined that the external output data generating section 2132 and the TMDS transmitter 251 are each not carrying out a process (NO in the step S12), the flow proceeds to the step S 13.

Step S13: The output control section 2131 refers to an argument of the <Set Stream Path> command to determine whether the physical address included in the argument is identical to the physical address of the mobile telephone terminal 2. In the case where the output control section 2131 has determined that the physical address included in the argument is identical to the physical address of the mobile telephone terminal 2 (NO in the step S 13), the flow ends there. In the case where the output control section 2131 has determined that the physical address included in the argument is not identical to the physical address of the mobile telephone terminal 2 (YES in the step S 13), the flow proceeds to the step S14.

Step S14: The output control section 2131 instructs the external output data generating section 2132 and the TMDS transmitter 251 to each carry out a process. Specifically, the output control section 2131 causes the external output data generating section 2132 to generate a video image for content which video image has resolution for external output. The output control section 2131 also carries out control so that the TMDS transmitter 251 (i) is supplied with electric power and (ii) transmits the video image for the content, the video image having been generated by the external output data generating section 2132. The flow ends after the step S 14.

Step S15: The output control section 2131 requests the television 1 to transmit display source information. Specifically, the output control section 2131 transmits, to the television 1 through the CEC I/F 252, a <Request Display Source Info> command storing, in its argument, the physical address of the mobile telephone terminal 2.

Step S16: The output control section 2131 receives a <Report Display Source Info> command from the television 1 through the CEC I/F 252.

Step S17: The output control section 2131 determines whether the <Report Display Source Info> command received in the step S 16 includes, in its argument, the physical address of the mobile telephone terminal 2, that is, whether a video image fed from the mobile telephone terminal 2 to the television 1 is being displayed by the LCD 110 of the television 1. In the case where the output control section 2131 has determined that the <Report Display Source Info> command includes, in its argument, the physical address of the mobile telephone terminal 2 (YES in the step S17), the flow ends there. In the case where the output control section 2131 has determined that the <Report Display Source Info> command does not include, in its argument, the physical address of the mobile telephone terminal 2 (NO in the step S 17), the flow proceeds to the step S 18.

Step S18: The output control section 2131 instructs the external output data generating section 2132 and the TMDS transmitter 251 to each stop the process. Specifically, the output control section 2131 causes the external output data generating section 2132 to stop the generation of a video image for content. The output control section 2131 also carries out control so that the battery 219 does not supply the TMDS transmitter 251 with operating electric power necessary for the TMDS transmitter 251 to operate. The flow ends after the step S 18.

### (Example Operation of Entire System 10)

With reference to the sequence diagram of Fig. 11, the description below deals with an example operation of the entire system 10 illustrated in (b) of Fig. 3, the system 10 including a television 1, a mobile telephone terminal 2, and a BD player 30. Fig. 11 shows the sings [Mobile] and [Player], which indicate the respective physical addresses (each included in an argument of a command) of the mobile telephone terminal 2 and the BD player 30.

This example operation of the entire system 10 is an operation that is carried out, in the state where the input source for the television 1 is the mobile telephone terminal 2, in response to the individual operations (1) and (2) below sequentially performed by the user.
(1) An operation of switching the input source for the television 1 from the mobile telephone terminal 2 to the BD player 30 so that the television 1 displays a video image from the BD player 30 as illustrated in the diagram in the upper half of Fig. 10
(2) An operation of switching the input source for the television 1 from the BD player 30 to the mobile telephone terminal 2 so that the television 1 displays a video image from the mobile telephone terminal 2 as illustrated in the diagram in the lower half of Fig. 10

First, the input source selecting section 304 of the television 1, upon acceptance of the operation (1) by the user, (i) switches the HDMI switch 11d to the HDMI terminal 11b that is HDMI-connected to the BD player 30 and (ii) instructs the management table updating section 303 to change the management table in the RAM 117 from the state illustrated in (b) of Fig. 7 to the state illustrated in (c) of Fig. 7. The input source selecting section 304 then transmits, to each of the mobile telephone terminal 2 and the BD player 30, a <Set Stream Path> command storing the physical address " 1.0.0.0" of the BD player 30 as an argument.

The BD player 30, upon acceptance of the <Set Stream Path> command, which stores the physical address " 1.0.0.0" of the BD player 30 as an argument, (i) supplies the television 1 with a video image and audio of a BD that the BD player 30 is reproducing and (ii) supplies the television 1 with a <Text View On> command and an <Active Source> command.

The output control section 2131 of the mobile telephone terminal 2, when it has accepted, through the CEC I/F 252, the <Set Stream Path> command, which does not store the physical address "2.0.0.0" of the mobile telephone terminal 2 as an argument, supplies the television 1, through the CEC I/F 252, with a <Request Display Source Info> command storing, in its argument, the physical address "2.0.0.0" of the mobile telephone terminal 2.

The display source information feeding section 305 of the television 1, upon acceptance of the <Request Display Source Info> command through the CEC I/F 152, refers to the management table recorded in the RAM 117 and having the state illustrated in (c) of Fig. 7. The display source information feeding section 305 then transmits, to the mobile telephone terminal 2 (which is the transmitter of the <Request Display Source Info> command), a <Report Display Source Info> command including, as an argument, the physical address " 1.0.0.0" of the BD player 30, which is displaying a video image.

Upon acceptance of the <Report Display Source Info> command through the CEC I/F 252, the output control section 2131 of the mobile telephone terminal 2, in the case where it has determined that the argument of the <Report Display Source Info> command does not include the physical address "2.0.0.0" of the mobile telephone terminal 2 (that is, a video image fed from the mobile telephone terminal 2 to the television 1 is not being displayed by the television 1), instructs the external output data generating section 2132 and the TMDS transmitter 251 to each stop the process.

Next, the input source selecting section 304 of the television 1, upon acceptance of the operation (2) by the user, (i) switches the HDMI switch 11d to the HDMI terminal 11a that is HDMI-connected to the mobile telephone terminal 2 and (ii) instructs the management table updating section 303 to change the management table in the RAM 117 from the state illustrated in (c) of Fig. 7 to the state illustrated in (b) of Fig. 7. The input source selecting section 304 then transmits, to each of the mobile telephone terminal 2 and the BD player 30, a <Set Stream Path> command storing the physical address "2.0.0.0" of the mobile telephone terminal 2 as an argument.

The output control section 2131 of the mobile telephone terminal 2, which did not transmit an <Active Source> command but has accepted, through the CEC I/F 252, a <Set Stream Path> command storing, as an argument, the physical address "2.0.0.0" of the mobile telephone terminal 2, causes the external output data generating section 2132 and the TMDS transmitter 251 to each start the process so that a video image and audio for content is supplied to the television 1 through the TMDS transmitter 251. The output control section 2131 further supplies the television 1 with a <Text View On> command and an <Active Source> command.

The input source selecting section 304 of the television 1, upon acceptance of a <Text View On> command and an <Active Source> command, (i) carries out control so that the video image from the mobile telephone terminal 2 is displayed by the LCD 110 and (ii) supplies the mobile telephone terminal 2 with a <Set Stream Path> command.

### (Variation of System 10)

With reference to Fig. 12, the description below deals with a system (hereinafter referred to as "system of the variation") that is identical to the system 10 of (b) of Fig. 3 except that the television 1 is replaced by a television 1'. The television 1' has a dual screen display function that allows respective video images from two different input sources to be simultaneously displayed on left and right screens of the LCD 110. Fig. 12 is a block diagram illustrating a configuration of the television 1'.

The following first describes an arrangement of the television 1'. The television 1' is substantially equivalent in function to the television 1, but differs therefrom in that the television 1' includes two HDMI receivers 100a and 100b and two HDMI switches (namely, an HDMI switch 11d connected to the HDMI receiver 100a and an HDMI switch 11e connected to the HDMI receiver 100b).

The television 1' includes a video image selector 107' that differs from the video image selector 107 of the television 1 in that the video image selector 107' is capable of selecting one or two of (1) a video image fed from the HDMI receiver 100a, (2) a video image fed from the HDMI receiver 100b, (3) a video image fed from the video image input terminal 101a, (4) a video image fed from the BD drive 102, (5) a video image fed from the tuner 103, (6) a video image fed from the IP broadcast tuner 104, and (7) a video image fed from the satellite broadcasting tuner 105. The other aspects of the arrangement of the television 1' are equivalent to those of the television 1, and are thus not described here.

With reference to the sequence diagram of Fig. 14, the description below deals with an example operation of the entire system of the variation. Fig. 14 shows the sings [TV], [Mobile], and [Player], which indicate the respective physical addresses (each included in an argument of a command) of the television 1', the mobile telephone terminal 2, and the BD player 30. This example operation of the entire system of the variation is an operation that is carried out, in the state where the mobile telephone terminal 2 and the BD player 30 are being selected as the input sources for the television 1 (that is, the state as illustrated in (a) of Fig. 10, where the left screen of the television 1 displays a video image from the BD player 30, whereas the right screen of the television 1 displays a video image from the mobile telephone terminal 2), in response to the individual operations (1) and (2) below sequentially performed by the user.
(1) An operation of switching the input source for the left screen of the television 1 from the BD player 30 to the tuner 103 so that the television 1 displays, on the left screen, a video image of a television broadcast as illustrated in the diagram in the middle of Fig. 10
(2) An operation of switching the input source for the right screen of the television 1 from the mobile telephone terminal 2 to the BD player 30 so that the television 1 displays, on the right screen, a video image from the BD player 30 as illustrated in the diagram at the bottom of Fig. 10

First, the input source selecting section 304 of the television 1, upon acceptance of the operation (1) by the user, (i) causes the video image selector 107 to select a video image from the tuner 103 in replacement of a video image (a video image from the BD player 30 in this variation) fed from the HDMI receiver 100a and (ii) instructs the management table updating section 303 to change the management table in the RAM 117 to the state illustrated in (b) of Fig. 7. The input source selecting section 304 then transmits, to each of the mobile telephone terminal 2 and the BD player 30, a <Set Stream Path> command storing the physical address "0.0.0.0" of the television 1' as an argument.

The output control section 2131 of the mobile telephone terminal 2, when it has accepted, through the CEC I/F 252, the <Set Stream Path> command, which does not store the physical address "2.0.0.0" of the mobile telephone terminal 2 as an argument, supplies the television 1, through the CEC I/F 252, with a <Request Display Source Info> command storing, in its argument, the physical address "2.0.0.0" of the mobile telephone terminal 2.

The display source information feeding section 305 of the television 1, upon acceptance of the <Request Display Source Info> command through the CEC I/F 152, refers to the management table recorded in the RAM 117 and having the state illustrated in (b) of Fig. 7. The display source information feeding section 305 then transmits, to the mobile telephone terminal 2 (which is the transmitter of the <Request Display Source Info> command), a <Report Display Source Info> command including, each as an argument, (i) the physical address "2.0.0.0" of the mobile telephone terminal 2, which is displaying a video image, and (ii) the physical address "0.0.0.0" of the television 1.

Upon acceptance of the <Report Display Source Info> command through the CEC I/F 252, the output control section 2131 of the mobile telephone terminal 2 determines that the argument of the <Report Display Source Info> command includes the physical address "2.0.0.0" of the mobile telephone terminal 2. In this case, the output control section 2131 carries out no special process, and causes the external output data generating section 2132 and the TMDS transmitter 251 to each continue to carry out the process.

Next, the input source selecting section 304 of the television 1, upon acceptance of the operation (2) by the user, (i) switches the HDMI switch 11e to the HDMI terminal 11b that is HDMI-connected to the BD player 30 and (ii) instructs the management table updating section 303 to change the management table in the RAM 117 from the state illustrated in (b) of Fig. 7 to the state illustrated in (c) of Fig. 7. The input source selecting section 304 then transmits, to each of the mobile telephone terminal 2 and the BD player 30, a <Set Stream Path> command storing the physical address " 1.0.0.0" of the BD player 30 as an argument.

The BD player 30, upon acceptance of the <Set Stream Path> command, which stores the physical address " 1.0.0.0" of the BD player 30 as an argument, (i) supplies the television 1 with a video image and audio of a BD that the BD player 30 is reproducing and (ii) supplies the television 1 with a <Text View On> command and an <Active Source> command.

The output control section 2131 of the mobile telephone terminal 2, when it has accepted, through the CEC I/F 252, the <Set Stream Path> command, which does not store the physical address "2.0.0.0" of the mobile telephone terminal 2 as an argument, supplies the television 1, through the CEC I/F 252, with a <Request Display Source Info> command storing, in its argument, the physical address "2.0.0.0" of the mobile telephone terminal 2.

The display source information feeding section 305 of the television 1, upon acceptance of the <Request Display Source Info> command through the CEC I/F 152, refers to the management table recorded in the RAM 117 and having the state illustrated in (b) of Fig. 7. The display source information feeding section 305 then transmits, to the mobile telephone terminal 2 (which is the transmitter of the <Request Display Source Info> command), a <Report Display Source Info> command including, each as an argument, (i) the physical address " 1.0.0.0" of the BD player 30, which is displaying a video image, and (ii) the physical address "0.0.0.0" of the television 1.

Upon acceptance of the <Report Display Source Info> command through the CEC I/F 252, the output control section 2131 of the mobile telephone terminal 2, in the case where it has determined that the argument of the <Report Display Source Info> command does not include the physical address "2.0.0.0" of the mobile telephone terminal 2 (that is, a video image fed from the mobile telephone terminal 2 to the television 1 is not being displayed by the television 1), instructs the external output data generating section 2132 and the TMDS transmitter 251 to each stop the process.

### (Process Carried Out in Case Where Video Image Fed from Mobile Telephone Terminal 2 to Television 1 Is Not Being Displayed by Television 1)

The description above states that in the case where a video image fed from the mobile telephone terminal 2 to the television 1 is not being displayed by the television 1, the external output data generating section 2132 and the TMDS transmitter 251 of the mobile telephone terminal 2 each stop the process. The mobile telephone terminal 2 may, in addition to (or in replacement of) this operation, carry out another process, for example, the process (a) and/or the process (b) below.

The process (a) causes the internal output data generating section 2133 to resume the process. Specifically, the process (a) causes the internal output data generating section 2133 to generate no video image for content (that is, causes the LCD 221 of the mobile telephone terminal 2 to display no video image for content) while a video image being fed by the mobile telephone terminal 2 to the television 1 is being displayed by the television 1. The process (a), in the case where a video image being fed by the mobile telephone terminal 2 to the television 1 has stopped being displayed by the television 1, causes (i) the internal output data generating section 2133 to generate a video image for content and (ii) the LCD 221 of the mobile telephone terminal 2 to display the video image for content.

The process (b), in the case where the mobile telephone terminal 2 is being supplied with no electric power from a commercial power supply, causes the battery 219 to be charged by receiving 5 V electric power from the television 1 through the HPD line.

The description below deals with the process (b) in detail with reference to Fig. 15. Fig. 15 is a flowchart illustrating a process of charging the mobile telephone terminal 2, the process being carried out by the mobile telephone terminal 2 and the television 1 in coordination with each other in the case where a video image fed from the mobile telephone terminal 2 to the television 1 has stopped being displayed by the LCD 110 of the television 2.

Step S21: First, the main controller 213 causes the 5 V electric power control section 255 to control, at 0 V, the voltage of a 5 V electric power pin of each HDMI terminal 21.

Step S22: The 5 V electric power detecting section 155 of the television 1 detects that the voltage of the 5 V electric power pin of each of the HDMI terminals 11a and 11b has fallen from 5 V to 0 V.

Step S23: When the 5 V electric power detecting section 155 has detected the fall, the CPU 118 refers to the management table in the RAM 117 to determine whether the input source connected to an HDMI terminal of which the 5 V electric power pin has a fallen voltage is of the device type "Mobile phone". In the case where the CPU 118 has determined that the input source is not of the device type "Mobile phone" (NO in the step S23), the process ends there. In the case where the CPU 118 has determined that the input source is of the device type "Mobile phone", the process proceeds to the step S24.

Step S24: The HPD control section 154 raises, to a H level, the voltage of an HPD pin of the HDMI terminal of which the 5 V electric power pin has a fallen voltage, and thus supplies electric power, through the HPD line of the HDMI cable 3, to a mobile telephone terminal 2 HDMI-connected to the above HDMI terminal.

Step S25: The HDMI terminal 21 receives electric power at the HPD pin.

Step S26: The charging circuit 216, in the case where it is being supplied with electric power at the power supply terminal 22 (YES in the step S26), directly uses that electric power, being supplied at the power supply terminal, to charge the battery 219. The charging circuit 216, in the case where it is not being supplied with electric power at the power supply terminal 22, supplies the battery 219 with electric power being supplied to the HDMI terminal 21.

As described above, in the case where a video image fed by the mobile telephone terminal 2 to the television 1 through the HDMI cable 3 is not being displayed by the television 1, the mobile telephone terminal 2, in the case where it is not being supplied with electric power from a commercial power supply, (i) receives electric power from the television 1 through the HPD pin of the HDMI cable 3 and (ii) uses that electric power to charge the battery 219.

### (Advantages of Mobile Telephone Terminal 2)

The mobile telephone terminal 2, as described above, includes (i) a TMDS transmitter 251 (video image feeding section) for feeding the television 1 with a video image reproduced by the main controller 213 and (ii) an output control section 2131 for, in the case where the television 1 is not displaying, on the LCD 110, a video image that the TMDS transmitter 251 has fed to the television 1, instructing the television 1 to return information to that effect in the form of a Report Display Source Info command that does not include, in its argument, the physical address of the mobile telephone terminal 2. The output control section 2131 (instructing means) provides an instruction to the television 1 in the form of a Report Display Source Info command.

The above arrangement advantageously allows the mobile telephone terminal 2 to recognize the state of a reproduced video image not being displayed by the television 1.

### (Control over Television and Source Device with Use of Portable Information Terminal)

The television 1, which can be operated with use of a remote control as described above, may alternately be operated with use of a portable information terminal such as a smart phone and a tablet PC.

Fig. 16 is a diagram illustrating a configuration of a system 10' that allows a television 1 to be operated with use of a portable information terminal 5. The system 10', as illustrated in Fig. 16, includes: a television 1; a mobile telephone terminal 2 as a source device; a portable information terminal 5; and a router 7. The source device, which can be a mobile telephone terminal 2, may alternatively be a source device (for example, a recorder) other than a mobile telephone terminal. The television 1 may be (i) a stationary television that connects to a commercial power supply or (ii) a battery-containing portable television (including a monitor for reproducing a video image sent from an external tuner over a wireless LAN).

The system 10' illustrated in Fig. 16 is arranged such that the television 1 and the mobile telephone terminal 2 are connected to each other by a HDMI cable 3. The system 10' is similar to the system 10 of (a) and (b) of Fig. 3 in that the television 1 and the mobile telephone terminal 2 control each other with use of CEC commands transmitted through the HDMI cable 3.

The system 10' illustrated in Fig. 16 is further arranged such that the television 1 and the portable information terminal 5 are communicable with each other. The television 1 and the portable information terminal 5 communicate with each other as supported by a communication medium that is not particularly limited. The configuration of Fig. 16 (i) interposes a router 7 between the television 1 and the portable information terminal 5, (ii) connects the television 1 with the router 7 by an Ethernet cable 6, and (iii) connects the router 7 with the portable information terminal 5 over a wireless LAN such as an IEEE802.11 series network. In the case where the television 1 includes a wireless LAN interface, the television 1 may be connected to (i) the router 7 over a wireless LAN or (ii) the portable information terminal 5 directly over a wireless LAN with no router 7 interposed therebetween.

The television 1 and the portable information terminal 5 preferably support UPnP (universal plug and play). In this case, the portable information terminal 5 is, in the case where it is present within the service area of the router 4, able to automatically detect the television 1 connected to the router 7 with use of a protocol such as SDDP. The portable information terminal 5, when detecting the television 1 as such, obtains the device name of the television 1.

The portable information terminal 5 includes, installed therein, an application (hereinafter referred to as "remote control application") that causes the portable information terminal 5 to function as a remote control for the television 1. In the case where (i) the portable information terminal 5 has detected the television 1 after the remote control application has been activated or (ii) the remote control application has been activated after the portable information terminal 5 has detected the television 1, the user can operate (IP control) the television 1 with use of the portable information terminal 5. In the case where the LAN includes a plurality of UPnP supporting devices such as the television 1, the portable information terminal 5 displays a list of the respective device names of such UPnP supporting devices to allow the user to select a device as an operation target.

The remote control application operating on the portable information terminal 5 generates a display screen to be displayed on a touch panel of the portable information terminal 5. (a) of Fig. 17 illustrates an example of such a display screen. This example display screen emulates a remote control, and includes such various keys for operating the television 1 as a power key (indicated by "TV Power"), volume adjustment keys (indicated by "-" and "+"), and channel keys (indicated by "1" " through "12" with broadcasting station names). For instance, depressing the channel key "1" causes the remote control application to transmit, to the television 1, a control command for instructing the television 1 to switch channels to Channel 1. The television 1 switches channels to Channel 1 in accordance with the control command received. During this operation, the Ethernet I/F 115 and the CPU 118 (see Fig. 5) of the television 1 function as control command receiving means.

The remote control application has, in addition to the function of operating the television 1, a function of operating the mobile telephone terminal 2. Specifically, depressing the "Link Operation" key provided at a lower portion of the display screen illustrated in (a) of Fig. 17 causes the mobile telephone terminal 2 to display the display screen illustrated in (b) of Fig. 17. The display screen illustrated in (b) of Fig. 17 includes such various keys for operating the mobile telephone terminal 2 as a fast rewind key, a play key, and a fast forward key. For instance, depressing the play key causes the remote control application to transmit, to the television 1, a control command for instructing the television 1 to start reproduction of target content. The television 1 converts the received control command into a CEC command corresponding to that control command, and transmits the resulting CEC command to the mobile telephone terminal 2. The mobile telephone terminal 2 starts reproduction of the target content in accordance with the CEC command received. During this operation, the Ethernet I/F 115, the CPU 118, and the HDMI receiver 100 (see Fig. 5) of the television 1 function as control command forwarding means.

The display screen for operating a source device may be displayed in such a manner that (i) the television 1 notifies the portable information terminal 5 of the logical address and/or device type of a source device and that (ii) the remote control application operating on the portable information terminal 5 displays a display screen corresponding to the logical address and/or device type of the source device. This arrangement allows, no matter what type of source device has become HDMI-connected to the television 1, the portable information terminal 5 to function as a remote control suitable for operation of a source device of that type.

The remote control application operating on the portable information terminal 5 basically emulates a conventional infrared radiation remote control, but may have an additional function absent in such a conventional infrared radiation remote control. The remote control application may have, in addition to functions that conventional infrared radiation remote controls have, such functions as listed below.
1. URL jump function: function of activating a web browser operating on the television 1 and causing the web browser to access a specified URL.
2. TV state obtaining function: function of obtaining status information (for example, source display information described above), settings information, and event information for the television 1.
3. Character input function: function of accepting a character string inputted with use of a software keyboard and transmitting the inputted character string to the television 1.
4. Information notifier function: function of notifying the television 1 of, in the case where the portable information terminal 5 has had an event such as a telephone call receiving event and an email receiving event, the occurrence of such an event.
5. Seamless search function: function of displaying the result of a search of program information, a recording list, VOD titles, and the Internet by a keyword.
6. Friendly name setting function: function of setting a friendly name (device list name) on the side of the television 1 with use of the portable information terminal 5.

The description above states that the portable information terminal 5 and the mobile telephone terminal 2 communicate with each other through the router 7 and the television 1. The system 10' may alternatively be arranged such that the portable information terminal 5 and the mobile telephone terminal 2 directly communicate with each other over a wireless LAN. In this case, the portable information terminal 5 can even directly transmit, to the mobile telephone terminal 2, a control command for operating the mobile telephone terminal 2.

Such a control command is, for example, a control command for controlling the mobile telephone terminal 2 so that the mobile telephone terminal 2 transmits the above <Request Display Source Info> command to the television 1. Specifically, in the case where the remote control application has the TV state obtaining function, the mobile telephone terminal 2 may, in the case where it has received the above control command from the portable information terminal 5 while reproducing content, transmit, to the television 1 (to which the above content has been provided), a <Request Display Source Info> command, that is, a command for obtaining display source information.

### (Supplemental Notes)

The above embodiment is, as described above, arranged such that the television 1, upon acceptance of a <Request Display Source Info> command, returns a <Report Display Source Info> command to the transmitter of a < Request Display Source Info> command. The television 1 does not, however, necessarily return a <Report Display Source Info> command. Specifically, the display source information feeding section 305 of the television 1 may (i) refer to the physical address stored in an argument of a <Request Display Source Info> command and (ii) return a <Report Display Source Info> command to the transmitter of the <Request Display Source Info> command only in the case where the physical address referred to above is associated with the device type "Mobile Phone" in the management table in the RAM 117.

The above arrangement may further alternatively be arranged such that (i) the CPU 118 of the television 1 includes a vendor ID obtaining section (manufacturer identifying means; not shown), (ii) in the case where the mobile telephone terminal 2 has become connected to the television 1, the vendor ID obtaining section issues a <Give Device Vendor ID> command to the mobile telephone terminal 2 to obtain, from the mobile telephone terminal 2, <Report Vendor ID> for notifying the television 1 of a vendor ID that identifies the manufacturer of the mobile telephone terminal 2, and (iii) the management table in the RAM 117 stores "vendor ID" in association with the respective values of "physical address", "logical address", "device type", and "On Display information". Further, the display source information feeding section 305 of the television 1 may, upon receipt of a <Request Display Source Info> command, (i) refer to the physical address stored in an argument of the <Request Display Source Info> command, and (ii) only in the case where the vendor ID associated, in the management table in the RAM 117, with the physical address referred to is a vendor ID indicative of a particular manufacturer (for example, "Sharp Corporation"), transmit a <Report Display Source Info> command back to the transmitter (that is, a mobile telephone terminal manufactured by Sharp Corporation).

The above embodiment is arranged such that the television 1, in the case where it is displaying, on the LCD 110, a video image being fed by the mobile telephone terminal 2 to the television 1, includes the physical address of the mobile telephone terminal 2 in an argument of a <Report Display Source Info> command to be transmitted to the mobile telephone terminal 2. The television 1 is, however, not limited to such an arrangement. In other words, the television 1 may, even in the case where it is displaying, on the LCD 110, a video image being fed by the mobile telephone terminal 2 to the television 1, not include, depending on the ambient condition for the television 1, the physical address of the mobile telephone terminal 2 in an argument of a <Report Display Source Info> command.

The television 1 may not include the physical address of the mobile telephone terminal 2 in an argument of a <Report Display Source Info> command in the case where, as a specific example, (i) the human sensor 121 has not detected the existence of a person in an area surrounding the television 1 or (ii) the illuminance sensor 122 has detected extremely high illuminance (higher than a predetermined threshold value), that is, the ambient brightness is so high that a video image displayed by the LCD 110 of the television 1 is difficult to see.

The mobile telephone terminal 2, in the above case, receives a <Report Display Source Info> command that does not include the physical address of the mobile telephone terminal 2 in an argument. The mobile telephone terminal 2 thus, even in the case where a video image that it is feeding to the television 1 is being displayed by the LCD 110, causes the external output data generating section 2132 and the TMDS transmitter 251 to each stop the process. This arrangement consequently prevents the TMDS transmitter 251 from feeding a video image to the television 1 in vain (that is, prevents the TMDS transmitter 251 from wasting electric power).

The mobile telephone terminal 2 may, in the case where it has received a <Report Display Source Info> command that does not include the physical address of the mobile telephone terminal 2 in an argument, not cause the external output data generating section 2132 and the TMDS transmitter 251 to each stop the process, but instead (i) cause the main controller 213 to lower, than normal, the value of luminance of a video signal to be fed to the television 1 and (ii) feed that video signal to the television 1. In the case where the mobile telephone terminal 2 is operated as such, the television 1 may not include the physical address of the mobile telephone terminal 2 in an argument of a <Report Display Source Info> command in the below case as well.

The television 1, which may have, as an image quality adjustment mode, such modes as a movie mode suitable for movie display and a video game mode suitable for game display, may not include the physical address of the mobile telephone terminal 2 in an argument of a <Report Display Source Info> command in the case where the television 1 has accepted a <Request Display Source Info> command from the mobile telephone terminal 2 in the state where the television 1 is set in a predetermined mode such as a movie mode and a video game mode.

With the above arrangement, the mobile telephone terminal 2, in the case where it has transmitted a <Request Display Source Info> command to the television 1 in the state where the image quality adjustment mode of the television 1 is set to the movie mode or video game mode, eventually feeds the television 1 with a video signal having luminance that is lower than normal. The above arrangement thus reduces the luminance of a video image to be displayed by the television 1 and consequently reduces electric power consumption of the television 1, and further protects the eyes of a viewer (for example, a child playing a video game with the image quality adjustment mode set to the video game mode).

The mobile telephone terminal 2 may, in the case where it has received broadcast content of a one-segment broadcast from the DTV section 224, (i) refer to genre information included in data of the broadcast content, and (ii) in the case where the genre information is set to a predetermined genre such as "news", "weather forecast", or "animation", lower, than normal, the value of luminance of a video signal to be fed to the television 1.

The above embodiment is arranged such that the output control section 2131 causes the TMDS transmitter 251 to stop the process in the case where a video image fed by the mobile telephone terminal 2 to the television 1 is not being displayed by the television 1. The output control section 2131 may alternatively cause the entire HDMI transmitter 200, including the TMDS transmitter 251, to stop the process.

In the case where the television 1 of the system 10' is arranged to, even in the case where it is displaying, on the LCD 110, a video image being fed by the mobile telephone terminal 2 to the television 1, not include, depending on the ambient condition for the television 1, the physical address of the mobile telephone terminal 2 in an argument of a <Report Display Source Info> command, the system 10' can, as a result of an operation of the remote control application by the user, further advantageously prevent the mobile telephone terminal 2 from wasting electric power.

In the case where, for instance, the television 1 of the system 10' is arranged to, in the case where the human sensor 121 has not detected the existence of a person in an area surrounding the television 1, not include, in an argument of a <Report Display Source Info> command, the physical address of a source device, that is, the supplier of a video signal, an assumption can be made that in the system 10', (i) even though there is no one in the room in which the television 1 is installed, the mobile telephone terminal 2 feeds a video signal to the television 1 and (ii) there is a user of the portable information terminal 5 in another room.

Under the above assumption, in the case where the user of the mobile telephone terminal 2 has, with use of the remote control application, provided the mobile telephone terminal 2 with an instruction to obtain display source information from the television 1, the mobile telephone terminal 2 receives from the television 1 a <Report Display Source Info> command that does not include the physical address of the mobile telephone terminal 2. This causes the mobile telephone terminal 2 to stop feeding a video signal to the television 1 or lowering the value of luminance of a video signal to be fed. The user can consequently, even in the case where the user is in a room different from the room in which the television 1 is installed, use the remote control application to prevent the television 1 from wasting electric power.

The above embodiment is arranged such that the television 1 includes a human sensor 121 and an illuminance sensor 122. Sensors such as the human sensor 121 and the illuminance sensor 122 may, however, be external to the television 1. The television 1, in this case, simply needs to include a sensor input terminal (not shown) and receive a sensor signal from a sensor such as the human sensor 121 and the illuminance sensor 122 at the sensor input terminal.

The description above takes a mobile telephone terminal 2 as an example of the reproduction device of the present invention. The reproduction device is, however, not limited to a mobile telephone terminal 2. Specifically, the reproduction device of the present invention simply needs to be capable of feeding, by means of wireless connection or wired connection, a display device with a video image and a command for controlling the display device, the reproduction device controlling, with use of such a command, the display device so that the display device provides the reproduction device with information indicative of whether the display device is displaying a video image that the reproduction device has fed.

Finally, the blocks of the mobile telephone terminal 2 described in the above embodiments may be implemented by means of (i) hardware with use of a logic circuit formed on an integrated circuit (IC chip) or (ii) software with use of a CPU (central processing unit) as the main controller 213.

In the latter case, the mobile telephone terminal 2 includes a CPU and memory devices (memory media). The CPU (central processing unit) executes instructions in programs realizing the functions of the main controller 213. The memory devices include a ROM (read only memory) which contains programs, a RAM (random access memory) to which the programs are loaded, and a memory containing the programs and various data. The object of the present invention can also be achieved by mounting, to the mobile telephone terminal 2, a computer-readable storage medium containing control program code (executable program, intermediate code program, or source program) for the mobile telephone terminal 2, which is software realizing the aforementioned functions, in order for the computer (or CPU, MPU) to retrieve and execute the program code contained in the storage medium.

The storage medium may be, for example, (i) a tape such as a magnetic tape and a cassette tape, (ii) a disk such as a magnetic disk (e.g., a floppy [registered trademark] disk or a hard disk) and an optical disk (e.g., a CD-ROM, an MO, an MD, a DVD, or a CD-R), (iii) a card such as an IC card (memory card) and an optical card, (iv) a semiconductor memory such as a mask ROM, an EPROM, an EEPROM, and a flash ROM, or (v) a logic circuit such as a PLD (programmable logic device) and a FPGA (field programmable gate array).

The mobile telephone terminal 2 may be so configured as to be communicable to a communication network so that the above program code can be supplied over that communication network. Such a communication network simply needs to be capable of transmitting a program code, and is not particularly limited. The communication network can be, for example, the Internet, an intranet, an extranet, a LAN, an ISDN, a VAN, a CATV a communications network, a virtual dedicated network (virtual private network), a telephone line network, a mobile communications network, or a satellite communications network. The transmission medium that forms the above communication network also simply needs to be capable of transmitting a program code, and is not particularly limited in configuration or type. The transmission medium may be, for example, (i) a wired transfer medium such as IEEE 1394, a USB, an electric power line, a cable TV line, a telephone line, and an ADSL (asymmetric digital subscriber line) line, or (ii) a wireless transfer medium such as infrared radiation (IrDA, remote control), Bluetooth (registered trademark), 802. 11 wireless, HDR (high data rate), NFC (near field communication), DLNA (digital living network alliance), a mobile telephone network, a satellite line, and a terrestrial digital network.

The present invention is not limited by the description of the embodiment above, but may be altered in various manners within the scope of the claims. Any embodiment based on a proper combination of technical means achieved by appropriate modifications within the scope of the claims is also encompassed in the technical scope of the present invention.

As described above, the reproduction device of the present invention may desirably be arranged such that the video image feeding section, in a case where the information has been returned as a result of the instruction by the instructing means, stops feeding the video image to the display device.

The above arrangement causes the reproduction device to, in the case where it has recognized that the display device is not feeding the video image fed to the display device, stop the video image feeding section from feeding the video image to the display device.

The above arrangement consequently achieves a further advantage of preventing electric power from being consumed in vain as a result of feeding a video image to the display device although no video image is being displayed by the display device.

The reproduction device of the present invention may desirably further include: an electric power source for supplying operating electric power necessary to operate the video image feeding section; and electric power supply control means for controlling the supply of the operating electric power by the electric power source, wherein: the electric power supply control means, in the case, controls the supply so that the electric power source does not supply the operating electric power to the video image feeding section.

With the above arrangement, the reproduction device, in the case where it has recognized that the display device is not feeding a video image that the reproduction device has fed to the display device, causes the electric power supply control means to control the supply so that the electric power source does not supply the operating electric power to the video image feeding section.

The above arrangement consequently achieves a further advantage of preventing electric power from being consumed in vain by the electric power source supplying the operating electric power to the video image feeding section although no video image is being displayed by the display device.

The reproduction device of the present invention may desirably be arranged such that the electric power source is a rechargeable battery; and the reproduction device is connected to the display device by a cable, the cable including: a first signal line through which the video image fed by the video image feeding section passes; a second signal line through which a directive command indicative of the instruction by the instructing means passes; and a third signal line through which the display device supplies electric power to the reproduction device, the reproduction device further including: a charging circuit for charging the rechargeable battery with use of the electric power supplied by the display device through the third signal line.

The above arrangement further advantageously allows the reproduction device to, even if it is not connected to a commercial power supply, charge the rechargeable battery as long as the reproduction device is supplied with electric power from the display device through the signal line of the cable.

The reproduction device of the present invention may desirably be arranged such that the display device is capable of recognizing existence of a person in an area surrounding the display device; and the instruction provided by the instructing means to the display device is an instruction to return the information to the instructing means even in a case where the display device has not recognized the existence of a person in the area.

The above arrangement further advantageously allows the reproduction device to, in the case where no viewer is present in an area surrounding the display device who views a video image fed to the display device, recognize such a state.

The reproduction device of the present invention may desirably be arranged such that the display device is capable of detecting illuminance in an area surrounding the display device; and the instruction provided by the instructing means to the display device is an instruction to return the information to the instructing means even in a case where the display device has detected illuminance having a predetermined threshold value or larger.

The above arrangement further advantageously allows the reproduction device to, in the case where an area surrounding the display device is extremely bright, recognize such a state.

In order to solve the above problem, a display device of the present invention includes: display control means for causing a display section to display a video image fed from a reproduction device; determining means for determining whether the video image is being displayed by the display section; and transmitting means for, in a case where the determining means has determined that the video image is not being displayed by the display section, transmitting, to the reproduction device that has fed the video image, information indicating that the video image is not being displayed by the display section.

With the above arrangement, the display device is advantageously capable of, in the case where the display device is not displaying a reproduction video image fed from the reproduction device, allowing the reproduction device to recognize that the display device is not displaying such a reproduction video image. The display device may be in the form of a television receiver including each of the means of the display device.

The present invention may be implemented in the form of a system including: the reproduction device; and the display device, the reproduction device and the display device being connected to each other in such a manner as to allow transmission of (i) the video image fed by the video image feeding section, (ii) a directive command indicative of the instruction by the instructing means, and (iii) the information.

The system of the present invention may desirably be arranged such that the system includes a plurality of the reproduction device; the display device returns, to a reproduction device that has transmitted the directive command, identification information as the information, the identification information identifying an individual reproduction device; and the identification information that the display device returns is information identifying a reproduction device that has fed the display device with the video image being displayed by the display device.

The above arrangement causes the display device of the system to, in the case where it is displaying a video image being fed from a reproduction device that has transmitted the directive command, return, to the reproduction device, identification information for identifying that reproduction device.

The system is thus further advantageous in that the reproduction device is capable of, by determining whether the identification information includes information that identifies the reproduction device, recognizing whether the display device is displaying a video image that the reproduction device is feeding to the display device.

The system of the present invention may desirably be arranged such that the display device includes manufacturer identifying means for identifying a manufacturer of the reproduction device that has transmitted the directive command; and the display device transmits, to the reproduction device that has transmitted the directive command, the information only in a case where the manufacturer identifying means has identified the manufacturer of the reproduction device as a particular manufacturer.

With the above arrangement, the system is further advantageously capable of allowing only a reproduction device of a particular manufacturer to recognize the state of the display device not displaying a video image that the reproduction device has fed.

The present invention includes in its scope (i) a program for causing the reproduction device of the present invention to operate, the program causing a computer to function as each of the means and (ii) a computer-readable recording medium on which the program is stored.

### Industrial Applicability

The reproduction device of the present invention is usable generally as a source device for feeding a video image to a sink device.

### Reference Signs List

1 television (display device)
109 LCD controller (display control means)
110 LCD (display section)
118 CPU
301 address obtaining section
302 device type obtaining section
303 management table updating section
304 input source selecting section
305 display source information feeding section (determining means)
2 mobile telephone terminal (reproduction device)
21 HDMI output terminal
22 power supply terminal
200 HDMI transmitter
201 micro USB terminal
202 micro USB I/F
203 Bluetooth I/F
204 WLAN I/F
205 memory card
206 USIM card
207 GPS
211 RF section
212 audio CODEC
213 main controller
2131 output control section (instructing means, electric power supply control means)
2132 external output data generating section
2133 internal output data generating section
214 RTC section
215 key scan section
216 charging circuit
217 power supply regulator
218 electric charge remaining amount detecting section
219 battery (electric power source)
220 LCD controller
221 LCD
222 touch panel
223 camera
224 DTV section
225 FLASH memory
226 RAM
227 loudspeaker
251 TMDS transmitter (video image feeding section)
252 CEC I/F
253 DDC I/F
254 HPD detecting section
255 5 V electric power control section
30 BD player (reproduction device)

## Claims

1. A reproduction device comprising:
a video image feeding section for feeding a reproduced video image to a display device; and
instructing means for instructing the display device to, in a case where the display device is not displaying the video image fed by the video image feeding section, return, to the instructing means, information indicating that the display device is not displaying the video image fed by the video image feeding section.

2. The reproduction device according to claim 1,
wherein:
the video image feeding section, in a case where the information has been returned as a result of the instruction by the instructing means, stops feeding the video image to the display device.

3. The reproduction device according to claim 2, further comprising:
an electric power source for supplying operating electric power necessary to operate the video image feeding section; and
electric power supply control means for controlling the supply of the operating electric power by the electric power source,
wherein:
the electric power supply control means, in the case, controls the supply so that the electric power source does not supply the operating electric power to the video image feeding section.

4. The reproduction device according to claim 3,
wherein:
the electric power source is a rechargeable battery; and
the reproduction device is connected to the display device by a cable,
the cable including:
a first signal line through which the video image fed by the video image feeding section passes;
a second signal line through which a directive command indicative of the instruction by the instructing means passes; and
a third signal line through which the display device supplies electric power to the reproduction device,
the reproduction device further comprising:
a charging circuit for charging the rechargeable battery with use of the electric power supplied by the display device through the third signal line.

5. The reproduction device according to any one of claims 1 to 4,
wherein:
the display device is capable of recognizing existence of a person in an area surrounding the display device; and
the instruction provided by the instructing means to the display device is an instruction to return the information to the instructing means even in a case where the display device has not recognized the existence of a person in the area.

6. The reproduction device according to any one of claims 1 to 5,
wherein:
the display device is capable of detecting illuminance in an area surrounding the display device; and
the instruction provided by the instructing means to the display device is an instruction to return the information to the instructing means even in a case where the display device has detected illuminance having a predetermined threshold value or larger.

7. A display device comprising:
display control means for causing a display section to display a video image fed from a reproduction device;
determining means for determining whether the video image is being displayed by the display section; and
transmitting means for, in a case where the determining means has determined that the video image is not being displayed by the display section, transmitting, to the reproduction device that has fed the video image, information indicating that the video image is not being displayed by the display section.

8. A television receiver comprising each of the means comprised by the display device according to claim 7.

9. A system comprising:
the reproduction device according to any one of claims 1 to 6; and
the display device,
the reproduction device and the display device being connected to each other in such a manner as to allow transmission of (i) the video image fed by the video image feeding section, (ii) a directive command indicative of the instruction by the instructing means, and (iii) the information.

10. The system according to claim 9,
wherein:
the system comprises a plurality of the reproduction device;
the display device returns, to a reproduction device that has transmitted the directive command, identification information as the information, the identification information identifying an individual reproduction device; and
the identification information that the display device returns is information identifying a reproduction device that has fed the display device with the video image being displayed by the display device.

11. The system according to claim 9,
wherein:
the display device includes manufacturer identifying means for identifying a manufacturer of the reproduction device that has transmitted the directive command; and
the display device transmits, to the reproduction device that has transmitted the directive command, the information only in a case where the manufacturer identifying means has identified the manufacturer of the reproduction device as a particular manufacturer.

12. A recognition method by which a reproduction device for reproducing a video image recognizes a state of a display device for displaying the video image,
the recognition method comprising the steps of:
(a) feeding a reproduced video image to the display device; and
(b) instructing the display device to, in a case where the display device is not displaying the video image fed in the step (a), return, to the reproduction device, information indicating that the display device is not displaying the video image fed in the step (a).

13. A program for causing a computer to operate as the reproduction device according to any one of claims 1 to 6, the program causing the computer to function as each of the means comprised by the reproduction device.

14. A computer-readable recording medium on which the program according to claim 13 is stored.
